# EUROPEAN PATENT APPLICATION

(11) **EP 4 633 004 A1**
(43) Date of publication of application: **15.10.2025**
(21) Application number: 24781212.6
(22) Date of filing: 27.03.2024
(51) Int. Cl.: H02J 50/00, H02J 50/10, B60L 53/12

(54) **WIRELESS POWER TRANSFER DEVICE COMPRISING COIL STRUCTURE FOR WIRELESS POWER TRANSFER, AND METHOD**

(30) Priority: 27.03.2023 KR 20230039986
(71) Applicant: Hyundai Motor Company, Seoul 06797 (KR); Kia Corporation, Seoul 06797 (KR)
(72) Inventor: CHI, Soung Hwan, Hwaseong-si, Gyeonggi-do 18280 (KR); SEONG, Jae Yong, Hwaseong-si, Gyeonggi-do 18280 (KR); LEE, Min Byeong, Hwaseong-si, Gyeonggi-do 18280 (KR)
(74) Representative: Isarpatent
(86) International application number: PCT/KR2024/003839
(87) International publication number: WO 2024/205222

(57) **Abstract**

Disclosed is a wireless power transfer pad which is prepared to transmit wireless power to a reception pad comprising a secondary coil. The wireless power transfer pad comprises three primary coils. The three primary coils are overlaid so that an outer circle, an inner circle, and a distinct region between the outer circle and the inner circle are formed.

## Description

### [Technical Field]

The present disclosure relates to a wireless power transmission device/pad and a wireless power reception device/pad for wireless power transfer (WPT), and a wireless power transfer method using the wireless power transmission device/pad and the wireless power reception device/pad. More particularly, the present disclosure relates to a coil structure ensuring a compatibility between various transmission and reception devices and improving a power transfer efficiency during the wireless power transfer, and a wireless power transfer method using the coil structure.

### [Background Art]

An electric vehicle (EV) is driven by an electric motor using power stored in a battery, and has the advantages of producing less pollution such as exhaust gas and noise compared with a conventional gasoline engine vehicle, experiencing fewer faults, having a longer life span, and enabling simplified driving operations.

The EVs may be classified into hybrid electric vehicles (HEVs), plug-in hybrid electric vehicles (PHEVs), and electric vehicles (EVs) based on a driving power source. The HEV has an engine as a main power source and a motor as an auxiliary power source. The PHEV has a motor and a battery as a main power source and an engine that is used when the battery is discharged. The EV has a motor but does not have an engine.

An electric vehicle charging system may be defined as a system that charges the battery mounted in the electric vehicle using electric power obtained from a commercial power grid or stored in an energy storage device. Such an electric vehicle charging system may have various forms depending on a type of the electric vehicle. For example, the electric vehicle charging system may include a conductive charging system using a cable or a non-contact wireless power transfer system.

During a charging session, a reception pad of a vehicle assembly (VA) mounted on the electric vehicle may form an inductive resonance coupling with a transmission pad of a ground assembly (GA) installed at a charging station or a charging spot and may charge the battery of the EV using electric power transferred from the ground assembly through the inductive resonance coupling.

Meanwhile, structures of the transmission pad and the reception pad may be critical factors for ensuring a high power transfer efficiency in the magnetic resonance type wireless power transfer system. In particular, in a typical configuration of the transmission pad or the reception pad including a ferrite structure facilitating the wireless power transfer and a coil wound around the ferrite structure, the power transfer efficiency may vary depending on the ferrite structure and/or the structure of the coil.

Accordingly, there is a need for a coil structure that may improve the power transfer efficiency in the wireless power transfer system.

### [Disclosure]

### [Technical Problem]

In general, structures and shapes of coils used for wireless power transfer of electric vehicles including the sizes and a single-phase or three-phase induction scheme may be determined according to the charging capacity. In a conventional wireless power transfer system, a vehicular assembly (VA) system needs to be matched with an appropriate ground assembly (GA) system depending on the type and the charging capacity of the VA system.

In particular, the single-phase induction coil suitable for a low-capacity wireless charging and the three-phase induction coil preferable for a high-capacity wireless charging usually have different shapes from each other and generate quite different magnetic field distribution for normal operations. As a result, the single-phase induction coil may be incompatible with the three-phase induction coil, and a plurality of chargers have to be prepared separately in the charging station to provide the charging service to the vehicles equipped with the single-phase induction coil and the three-phase induction coil, respectively.

To solve the above problems, one objective of the present disclosure is to provide a hybrid charging coil structure which can selectively generate a magnetic field distribution pattern of the single-phase coil for the low-capacity wireless charging or a magnetic field distribution pattern of the three-phase coil for the high-capacity wireless charging based on a single hardware.

Another objective of the present disclosure is to provide a primary coil structure for the wireless power transfer that is highly compatible with a case where a secondary coil on the vehicle supports only the single-phase operation, a case where the secondary coil supports only the three-phase operation, and a case where the secondary coil supports both the single-phase operation and the three-phase operation.

Another objective of the present disclosure is to provide a secondary coil structure for the wireless power transfer that is highly compatible with a case where a primary coil in the charging station supports only the single-phase operation, a case where the primary coil supports only the three-phase operation, and a case where the primary coil supports both the single-phase operation and the three-phase operation.

Another objective of the present disclosure is to provide a primary/secondary coil structure operable selectively in a single-phase operation mode and a three-phase operation mode based on a phase of input power applied to the primary coil and in consideration of the charging capacity, and a wireless power transfer method using the coil structure.

Another object of the present disclosure is to provide a primary or secondary coil structure for wireless power transfer, which has high compatibility and is capable of supporting cases where the primary coil or the secondary coil is of a double D coil (DD coil) type or a coil type capable of both transmission and reception using the DD coil, and to provide a corresponding power transfer (control) method.

Another object of the present disclosure is to provide a power transfer (control) method capable of selecting a three-phase operation mode or a single-phase operation mode based on an operation mode supported by a primary coil, an operation mode supported by a secondary coil, and/or an alignment state between central axes of the primary coil and the secondary coil, and determining a detailed operation method for implementing the single-phase operation mode or a phase of each input power signal.

Another objective of the present disclosure is to provide a wireless power transfer device having an optimized arrangement of a novel coil structure and showing a high power transfer efficiency.

Another object of the present disclosure is to provide a new coil structure capable of improving electromagnetic compatibility (EMC) and electromagnetic field (EMF) issues by having a refined magnetic field distribution.

Another object of the present disclosure is to provide a new coil structure that increases the utilization rate of an area surrounded by a coil during power transfer.

### [Technical Solution]

According to an aspect of an exemplary embodiment, a wireless power transmission pad provided to transmit wireless power to a reception pad including a secondary coil, includes: a first primary coil 510 arranged to surround a first outer portion 510a of an outer circle and a first inner portion 510b of an inner circle; a second primary coil 520 arranged to surround a second outer portion 520a of the outer circle and a second inner portion 520b of the inner circle; and a third primary coil 530 arranged to surround a third outer portion 530a of the outer circle and a third inner portion 530b of the inner circle.

The first primary coil, the second primary coil, and the third primary coil may be arranged to form the outer circle by being overlaid. According to an exemplary embodiment of the present disclosure, the three primary coils may be arranged such that all regions within the outer circle may be utilized for power transfer.

The first primary coil, the second primary coil, and the third primary coil may be arranged to form the inner circle by being overlaid.

The first primary coil, the second primary coil, and the third primary coil may be arranged to divide a space between the outer circle and the inner circle into six regions having uniform areas.

The first primary coil may include: a first outer coil portion 510a disposed on the first outer portion; a first inner coil portion 510b disposed on the first inner portion and facing the first outer coil portion; and a first connection coil portion 510c connecting the first outer coil portion and the first inner coil portion.

The second primary coil may include: a second outer coil portion 520a disposed on the second outer portion; a second inner coil portion 520b disposed on the second inner portion and facing the second outer coil portion; and a second connection coil portion 520c connecting the second outer coil portion and the second inner coil portion.

The third primary coil may include: a third outer coil portion 530a disposed on the third outer portion; a third inner coil portion 530b disposed on the third inner portion and facing the third outer coil portion; and a third connection coil portion 530c connecting the third outer coil portion and the third inner coil portion.

The first primary coil, the second primary coil, and the third primary coil may be formed by winding a flat wire at least once.

The first primary coil, the second primary coil, and the third primary coil may be formed by winding a litz wire at least once.

The first primary coil, the second primary coil, and the third primary coil may be controlled to perform a single-phase operation or a three-phase operation according to a phase difference of input power among the primary coils.

The first primary coil, the second primary coil, and the third primary coil may be controlled to perform a single-phase operation based on input power having the same phase being applied to each of the primary coils.

The first primary coil, the second primary coil, and the third primary coil may be controlled to perform a three-phase operation based on input power having a predetermined phase difference being applied to each of the primary coils.

The first primary coil, the second primary coil, and the third primary coil may be controlled to perform a single-phase operation or a three-phase operation based on an operation mode permitted by the secondary coil of the reception pad.

According to an aspect of an exemplary embodiment, a wireless power reception pad provided to receive wireless power from a wireless power transmission pad including a primary coil, includes: a first secondary coil arranged to surround a first outer portion of an outer circle and a first inner portion of an inner circle; a second secondary coil arranged to surround a second outer portion of the outer circle and a second inner portion of the inner circle; and a third secondary coil arranged to surround a third outer portion of the outer circle and a third inner portion of the inner circle.

The first secondary coil, the second secondary coil, and the third secondary coil may be arranged to form the outer circle by being overlaid. According to an exemplary embodiment of the present disclosure, the three secondary coils may be arranged such that all regions within the outer circle may be utilized for power transfer.

The first secondary coil, the second secondary coil, and the third secondary coil may be arranged to form the inner circle by being overlaid.

The first secondary coil, the second secondary coil, and the third secondary coil may be arranged to divide a space between the outer circle and the inner circle into six regions having uniform areas.

The first secondary coil may include: a first outer coil portion disposed on the first outer portion; a first inner coil portion disposed on the first inner portion and facing the first outer coil portion; and a first connection coil portion connecting the first outer coil portion and the first inner coil portion.

The second secondary coil may include: a second outer coil portion disposed on the second outer portion; a second inner coil portion disposed on the second inner portion and facing the second outer coil portion; and a second connection coil portion connecting the second outer coil portion and the second inner coil portion.

The third secondary coil may include: a third outer coil portion disposed on the third outer portion; a third inner coil portion disposed on the third inner portion and facing the third outer coil portion; and a third connection coil portion connecting the third outer coil portion and the third inner coil portion.

The first secondary coil, the second secondary coil, and the third secondary coil may be formed by winding a flat wire or a litz wire at least once.

The first primary coil, the second primary coil, and the third primary coil may be formed by winding a litz wire at least once.

According to an aspect of an exemplary embodiment, a method of transferring wireless power from a transmission pad including a primary coil to a reception pad including a secondary coil, includes: providing a first primary coil arranged to surround a first outer portion of an outer circle and a first inner portion of an inner circle, a second primary coil arranged to surround a second outer portion of the outer circle and a second inner portion of the inner circle, and a third primary coil arranged to surround a third outer portion of the outer circle and a third inner portion of the inner circle, such that the outer circle is formed by the first primary coil, the second primary coil, and the third primary coil; and controlling such that wireless power is transferred to the reception pad through a single-phase operation or a three-phase operation by applying input power to the first primary coil, the second primary coil, and the third primary coil.

In the controlling of the wireless power being transferred to the reception pad, the wireless power may be transferred to the reception pad through the single-phase operation by applying input power of the same phase to the first primary coil, the second primary coil, and the third primary coil.

In the controlling of the wireless power being transferred to the reception pad, the wireless power may be transferred to the reception pad through the three-phase operation by applying input power having a constant phase difference respectively to the first primary coil, the second primary coil, and the third primary coil.

In the controlling of the wireless power being transferred to the reception pad, the first primary coil, the second primary coil, and the third primary coil may be controlled to perform the single-phase operation or the three-phase operation based on an operation mode permitted by the secondary coil of the reception pad.

In the providing of the first primary coil, the second primary coil, and the third primary coil, the first primary coil, the second primary coil, and the third primary coil may be arranged such that a space between the outer circle and the inner circle is divided into six regions having uniform areas.

According to an aspect of an exemplary embodiment, a method of transferring wireless power from a transmission pad including a primary coil to a reception pad including a secondary coil, includes: determining an operation mode of an input power signal to be applied to the primary coil based on one or more of an operation mode supported by the primary coil, an operation mode supported by the secondary coil, or an alignment state between central axes of the primary coil and the secondary coil; and controlling such that wireless power is transferred to the reception pad by applying the input power signal to the primary coil based on the operation mode.

The primary coil may include three primary coil elements sharing a central region, and each of the three primary coil elements includes an outer region independent of the other primary coil elements.

In the determining of the operation mode of the input power signal, the operation mode of the input power signal may be determined as either a three-phase operation mode or a single-phase operation mode from among operation modes commonly supported by the primary coil and the secondary coil.

In the determining of the operation mode of the input power signal, the operation mode of the input power signal may be determined as either a three-phase operation mode or a single-phase operation mode based on a user request and a charging condition of the reception pad.

In the determining of the operation mode of the input power signal, the operation mode of the input power signal may be determined as either a three-phase operation mode or a single-phase operation mode based on an alignment state between central axes of the primary coil and the secondary coil.

Based on the operation mode of the input power signal being determined as the single-phase operation mode, the controlling of the wireless power being transferred to the reception pad may include: determining at least one active primary coil element among the three primary coil elements to which the input power signal is to be applied; and determining a phase of the input power signal to be applied to each of the active primary coil elements.

In the controlling of the wireless power being transferred to the reception pad, all of the three primary coil elements may be determined as the active primary coil elements, and based on a single-phase input power signal having the same phase being applied to all of the three active primary coil elements, a magnetic field in the single-phase operation mode may be formed via the central region of the primary coil, and wireless power may be transferred to the reception pad.

In the controlling of the wireless power being transferred to the reception pad, one of the three primary coil elements may be determined as the active primary coil element, and based on a single-phase input power signal being applied to the one active primary coil element, a magnetic field in the single-phase operation mode may be formed via an active central region including a center of the one active primary coil element, and wireless power is transferred to the reception pad.

In the controlling of the wireless power being transferred to the reception pad, two of the three primary coil elements may be determined as the active primary coil elements, and based on a single-phase input power signal having opposite phases being applied to the two active primary coil elements, a magnetic field in the single-phase operation mode may be formed via an exclusive region that is not overlapped between the two active primary coil elements, and wireless power is transferred to the reception pad.

### [Advantageous Effects]

According to an exemplary embodiment of the present disclosure, the form of a wireless charging coil, which conventionally varies depending on complex capacities or operational methods, can be unified from the perspective of a service provider, thereby reducing system installation costs.

According to an exemplary embodiment of the present disclosure, user inconvenience in selecting and locating a charging spot can be alleviated, reducing aversion to wireless charging and lowering the entry barrier for purchasing electric vehicles adopting a wireless charging method.

According to an exemplary embodiment of the present disclosure, a transmission/reception coil structure having high compatibility with conventional coil structures can be provided, which allows installation on either the secondary coil on the vehicle side or the primary coil on the charging station side.

According to an exemplary embodiment of the present disclosure, a primary/secondary coil structure capable of selectively applying either a single-phase operation mode or a three-phase operation mode, considering the charging capacity based on the phase of the input power applied to the primary coil, and a wireless power transfer method employing such structure can be provided.

According to an exemplary embodiment of the present disclosure, a primary or secondary coil structure for wireless power transfer with high compatibility can be provided, which is capable of supporting a coil of the DD coil (double D coil) type or a coil type capable of transmission and reception with the DD coil, and a power transfer (control) method corresponding to the coil structure can be provided.

According to an exemplary embodiment of the present disclosure, a power transfer (control) method can be provided that selects either a three-phase operation mode or a single-phase operation mode based on the operation mode supported by the primary coil, the operation mode supported by the secondary coil, and/or the alignment state between the central axes of the primary coil and the secondary coil, and determines a detailed operation method or the phase of each input power signal for implementing the single-phase operation mode.

According to an exemplary embodiment of the present disclosure, a wireless power transfer (WPT) device with high power transfer efficiency can be provided by optimizing the layout of a new coil structure.

According to an exemplary embodiment of the present disclosure, a new coil structure having a refined magnetic field distribution can be provided to improve EMC and EMF issues.

According to an exemplary embodiment of the present disclosure, a new coil structure can be provided to increase the utilization rate of the area surrounded by the coil during power transfer.

### [Description of Drawings]

FIG. 1 is an illustration of a wireless power transfer system to which an exemplary embodiment of the present disclosure is applicable.
FIGS. 2 and 3 illustrate a Cartesian coordinate system compatible with a definition in SAE J2954 standard and applicable to an embodiment of the present disclosure.
FIG. 4 is a circuit diagram of an equivalent circuit of an electric vehicle wireless charging circuit according to an exemplary embodiment of the present disclosure.
FIG. 5 shows an equivalent circuit of a single-phase to single-phase wireless power transfer (WPT) system according to an exemplary embodiment of the present disclosure.
FIG. 6 is a conceptual cross sectional view and an elevation view of a power transmission pad according to an exemplary embodiment of the present disclosure.
FIG. 7 shows an equivalent circuit of a three-phase to three-phase WPT system according to an exemplary embodiment of the present disclosure.
FIG. 8 is a conceptual plan view of a transmission and/or reception coil structure compatible with a three-phase/single-phase mode for power transfer according to an exemplary embodiment of the present disclosure.
FIG. 9 is a conceptual plan view of a transmission and/or reception coil structure compatible with a three-phase/single-phase mode for power transfer according to another exemplary embodiment of the present disclosure.
FIG. 10 is a conceptual plan view illustrating components of the coils shown in FIG. 9 in detail.
FIG. 11 is a graph illustrating the phase of the three-phase alternating current signals by region for some regions in the exemplary embodiments of FIG. 8 to FIG. 10.
FIG. 12 is a graph illustrating the phase of the three-phase alternating current signals by region for the remaining regions in the exemplary embodiments of FIG. 8 to FIG. 10.
FIG. 13 is a graph illustrating the phase of the three-phase alternating current signals by region and by coil in the exemplary embodiments of FIG. 8 to FIG. 10.
FIG. 14 is a graph illustrating simulation results of the magnetic flux density in the exemplary embodiments of FIG. 9 and FIG. 10.
FIG. 15 is a graph illustrating simulation results of the magnetic flux density in the exemplary embodiment of FIG. 8.
FIG. 16 is an operational flowchart conceptually illustrating a wireless power transfer method according to an exemplary embodiment of the present disclosure.
FIG. 17 is an operational flowchart conceptually illustrating a wireless power transfer method according to another exemplary embodiment of the present disclosure.
FIG. 18 is an operational flowchart illustrating in detail the method of FIG. 17 according to another exemplary embodiment of the present disclosure.
FIG. 19 is a conceptual diagram illustrating an exemplary embodiment of the present disclosure in which the method of FIG. 18 is performed.
FIG. 20 is a conceptual diagram illustrating another exemplary embodiment of the present disclosure in which the method of FIG. 18 is performed.
FIG. 21 is a conceptual diagram illustrating still another exemplary embodiment of the present disclosure in which the method of FIG. 18 is performed.
FIG. 22 is a block diagram illustrating a generalized configuration of hardware that is included in or associated with a wireless power transmission pad and/or a wireless power reception pad of the present disclosure to control a sequence for wireless power transfer.

### [Best mode of the Invention]

For a clearer understanding of the features and advantages of the present disclosure, exemplary embodiments of the present disclosure will be described in detail with reference to the accompanying drawings. However, it should be understood that the present disclosure is not limited to particular embodiments disclosed herein but includes all modifications, equivalents, and alternatives falling within the spirit and scope of the present disclosure. In the drawings, similar or corresponding components may be designated by the same or similar reference numerals.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC) or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted on the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted on the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted on the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

The electric vehicle charging system may include a conductive charging system using a cable or a non-contact wireless power transfer system, but is not limited thereto. The electric vehicle charging system may be defined as a system that charges the battery mounted in the electric vehicle using electric power obtained from a commercial power grid or stored in an energy storage device and may have various forms depending on a type of the electric vehicle.

SAE TIR J2954 standard, which is one of the most representative industrial standards for wireless charging, establishes industry-standard specification guidelines that define acceptable criteria for interoperability, electromagnetic compatibility, minimum performance, safety and testing for wireless charging of light-duty electric and plug-in electric vehicles.

As an example of the wireless charging system, the wireless charging system (WCS) according to the J2954 standard may include a grid interface, a high frequency power inverter, power transfer coils, a filter, a rectifier, an optional regulator, and communication circuits between the vehicle energy charging/storage system and a grid connected power inverter. The grid interface may be similar to a conventional EVSE connection for single or three-phase AC power.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

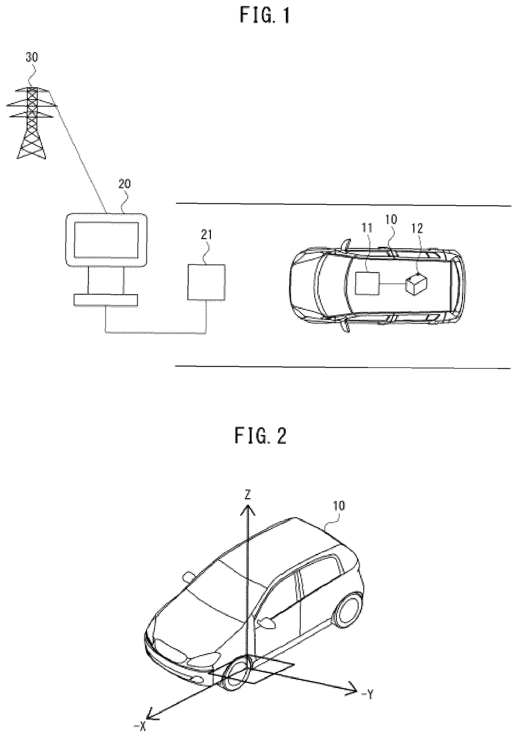

FIG. 1 is an illustration of a wireless power transfer system to which an exemplary embodiment of the present disclosure may be applied.

As shown in FIG. 1, the wireless power transfer may be performed by at least one component of an electric vehicle (EV) 10 and a charging station 20 and may be used to transfer electric power to the EV 10 without any conductive wiring.

The EV 10 according to an exemplary embodiment of the present disclosure may include a hybrid electric vehicle (HEV) having an electric motor as well as an internal combustion engine, and may include not only an automobile but also a motorcycle, a cart, a scooter, and an electric bicycle.

The EV 10 may generally be defined as a vehicle that supplies an electric power derived from a rechargeable energy storage such as a battery 12 to an electric motor in a power train system of the EV 10.

The EV 10 may include a power reception pad 11 having a reception coil suitable for receiving the electric power for charging the battery 12 by the wireless power transfer and may include a plug receptacle or inlet suitable for receiving the electric power for charging the battery 12 by the conductive charging. In particular, the EV 10 configured for conductively charging the battery 12 may be referred to as the plug-in electric vehicle (PEV).

The charging station 20 may be connected to the power grid 30 or a power backbone, and may provide the AC power received from the power grid 30 or the power backbone to a power transmission pad 21 having a transmission coil through a power link.

The charging station 20 may communicate with the power grid 300, or an infrastructure management system or an infrastructure server managing the power grid, and may be configured to perform wireless communications with the EV 10. The wireless communications may be performed through Bluetooth, Zigbee, cellular, wireless local area network (WLAN), or the like.

In addition, for example, the charging station 20 may be located at various places including a parking area of the owner's house of the EV 10, a parking lot for charging the EV at a gas station, a parking lot at a shopping center or a workplace, or the like, but is not limited thereto.

The wireless power transfer to the battery 12 of the EV 10 may be performed as follows. First, the power reception pad 11 of the EV 10 is disposed in an energy field over the power transmission pad 21. Then the reception coil in the power reception pad 11 and the transmission coil in the power transmission pad 21 may be coupled to and interact with each other. An electromotive force may be induced in the power reception pad 11 as a result of the coupling or the interaction, and the battery 12 may be charged by the induced electromotive force.

The charging station 20 and the power transmission pad 21 as a whole or in part may be referred to as the supply power circuit (SPC) or the ground assembly (GA), of which meaning and function were defined above.

Also, the power reception pad 11 along with all or some of the other internal components of the EV 10 may be referred to as the EV power circuit (EVPC) or the vehicle assembly (VA), of which meaning and function were defined above.

Here, each of the power transmission pad 21 and the power reception pad 11 may be configured as a non-polarized or polarized pad.

The non-polarized pad may have one pole in a center of the pad and an opposite pole around its periphery. In this case, the magnetic flux may be formed to exit from the pole in the center of the pad and return to the pole in the periphery from outside of the pad.

The polarized pad may have two poles arranged symmetrically at opposite positions on the pad. In this case, the magnetic flux may be formed according to the orientation of the pad.

In the present specification, the power transmission pad 21 and the power reception pad 11 may be collectively referred to as wireless charging pads.

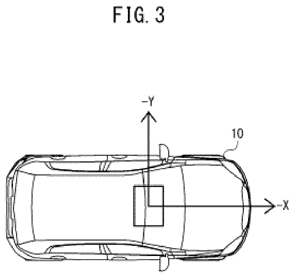

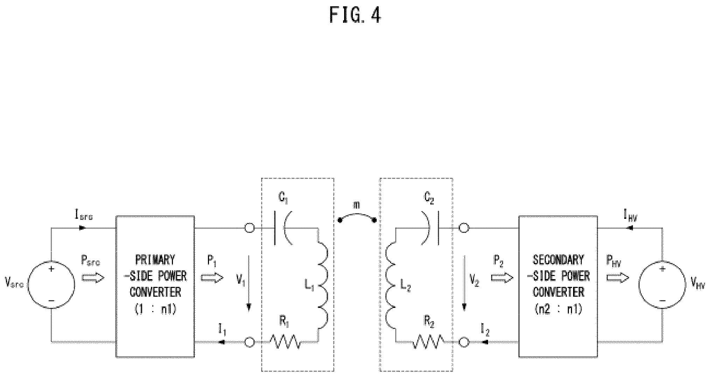

FIGS. 3 and 4 illustrate a Cartesian coordinate system compatible with a definition in the SAE J2954 standard and applicable to an embodiment of the present disclosure.

As shown in FIGS. 2 and 3, in the right-handed Cartesian coordinate system, +X axis may be set to point to the rear of the vehicle, and -X axis may be set to point to the front of the vehicle. +Y axis may be set to point to the right of the vehicle, i.e. to a passenger side of a left-hand drive car, and -Y axis may be set to point to the left of the vehicle in an exemplary embodiment. +Z axis may be set to point to the upward direction, and -Z axis may be set to point to the downward direction. The magnetic center of a coil of the power transmission pad 21 or the power reception pad 11 may be defined as x=0 and y=0, and a ground surface may be defined as z=0.

FIG. 4 is a circuit diagram of an equivalent circuit of an electric vehicle wireless charging circuit according to an exemplary embodiment of the present disclosure.

A left portion of the circuit shown in FIG. 4 may be interpreted as a representation of all or part of a power supply Vsrc supplied from the power grid and a charging station 20 including the power transmission pad 21, and a right portion of the circuit shown in FIG. 4 may be interpreted as a representation of all or part of the electric vehicle including the power reception pad and the battery.

The left portion of the circuit shown in FIG. 4 may provide an output power Psrc corresponding to the power source Vsrc supplied from the power grid to a primary-side power converter. The primary-side power converter may perform a frequency-conversion and AC-DC or DC-to-AC conversion of the power Psrc to output a converted output power P1 to a transmission coil L1, so that the transmission coil L1 may generate an electromagnetic field at a desired operating frequency.

The primary-side power converter may include an AC-DC converter configured to convert the power Psrc which is an AC power supplied from the power grid into a DC power and a low-frequency (LF) converter configured to convert the DC power into an AC power having an operating frequency suitable for the wireless charging. For example, the operating frequency for the wireless charging may be determined to be in a frequency range 80-90 kHz, but is not limited thereto.

The power P1 output by the primary-side power converter may be supplied to a circuit including the transmission coil L1, a first capacitor C1, and a first resistor R1. In particular, a capacitance of the first capacitor C1 may be determined as a value establishing the operating frequency suitable for the wireless charging together with the transmission coil L1. The first resistor R1 may represent a power loss in the transmission coil L1 and the first capacitor C1.

Further, the transmission coil L1 may be electromagnetically coupled with a reception coil L2 by a coupling coefficient m so that a power P2 is transferred to the reception coil L2 or the power P2 is induced in the reception coil L2. Therefore, the meaning of power transfer in the present disclosure may be used interchangeably with the meaning of power induction.

The power P2 induced in or transferred to the reception coil L2 may be provided to a secondary-side power converter. Particularly, a capacitance of a second capacitor C2 may be determined as a value establishing the operating frequency suitable for the wireless charging together with the reception coil L2. A second resistor R2 may represent a power loss in the reception coil L2 and the second capacitor C2.

The secondary-side power converter may include an AC-DC converter configured to convert the supplied power P2 of the operating frequency to a DC power having a voltage level suitable for the battery VHV of the EV.

The electric power PHV converted from the power P2 supplied to the secondary-side power converter may be used for charging the battery VHV mounted inside the EV.

The right portion of the circuit shown in FIG. 4 may further include a switch for selectively connecting or disconnecting the reception coil L2 with the battery VHV.

Resonance frequencies of the transmission coil L1 and the reception coil L2 may be similar or identical to each other, and the reception coil L2 may be positioned in the electromagnetic field generated by the transmission coil L1.

It should be noted that the circuit of FIG. 4 is illustrative for the WPT in the EV WPT system used for exemplary embodiments of the present disclosure, and the present disclosure is not limited to the circuit illustrated in FIG. 4.

On the other hand, since the power loss may increase with a distance between the transmission coil L1 and the reception coil L2, it may be an important factor to set the relative positions of the transmission coil L1 and the reception coil L2 appropriately.

The transmission coil L1 may be included in the transmission pad 21 shown in FIG. 1, and the reception coil L2 may be included in the reception pad 11 shown in FIG. 1. Additionally, the transmission coil may be referred to as the primary coil or a ground assembly (GA) coil, and the reception coil may be referred to as the secondary coil or a vehicle assembly (VA) coil. Therefore, a positional alignment between the transmission pad and the reception pad or a positional alignment between the EV and the transmission pad may be an important factor also.

The positional alignment between the transmission pad 21 and the reception pad 11 in the electric vehicle 10 shown in FIG. 1 may correspond to the term "alignment" described above and therefore may be defined as the positional alignment between the SPC/GA and the EVPC/VA and is not limited to the positional alignment of the transmission pad 21 and the reception pad 11.

The transmission pad 21 may be positioned below the ground surface, may be positioned on the ground surface, or may be positioned below the ground surface with its top surface being exposed over the ground surface. At this time, as shown in FIGS. 2 and 3, the x-axis may indicate the front-to-back direction of the vehicle, the y-axis may indicate the left--right direction of the vehicle, and the z-axis may indicate the up-and-down direction of the vehicle.

In addition, the reception pad 11 of the EV may be defined by different categories according to height (defined in the z-direction) measured from the ground surface. For example, the reception pad 11 having a height of about 100-150 millimeters (mm) from the ground surface may be categorized into a class 1. The reception pad 11 having a height of about 140-210 mm may be categorized into a class 2. The reception pad 11 having a height of about 170-250 mm may be categorized into a class 3. The reception pad may support only some of the classes 1 through 3. For example, only the class 1 may be supported by the reception pad 11, or the class 1 and 2 may be supported by the reception pad 11.

The height of the reception pad measured from the ground surface may correspond to the previously defined term "vehicle magnetic ground clearance."

Meanwhile, a vertical position (i.e., position in the z-direction) of the power transmission pad 21 may be determined to be disposed between the maximum class and the minimum class supported by the power reception pad 11. For example, in case that the reception pad supports only the class 1 and 2, the vertical position of the power transmission pad 21 may be in a range between about 100 and 210 mm with respect to the power reception pad 11.

In addition, a gap between the center of the power transmission pad 21 and the center of the power reception pad 11 may be determined to be disposed within the limits of the horizontal and vertical directions (defined in the x- and y-directions). For example, the gap (e.g., Δy) may be determined to be within ±75 mm in a lateral direction (defined in the y-direction), and within ±100 mm in the longitudinal direction (defined in the x-direction).

The relative positions of the power transmission pad 21 and the power reception pad 11 may be varied in accordance with experimental results, and it should be noted that the numerical values mentioned above are provided as examples.

Although the alignment between the pads has been described above on the assumption that each of the transmission pad 21 and the reception pad 11 includes a coil, the alignment between the pads may be defined more specifically by an alignment between the transmission coil (or GA coil) and the reception coil (or VA coil) included in the transmission pad 21 and the reception pad 11, respectively.

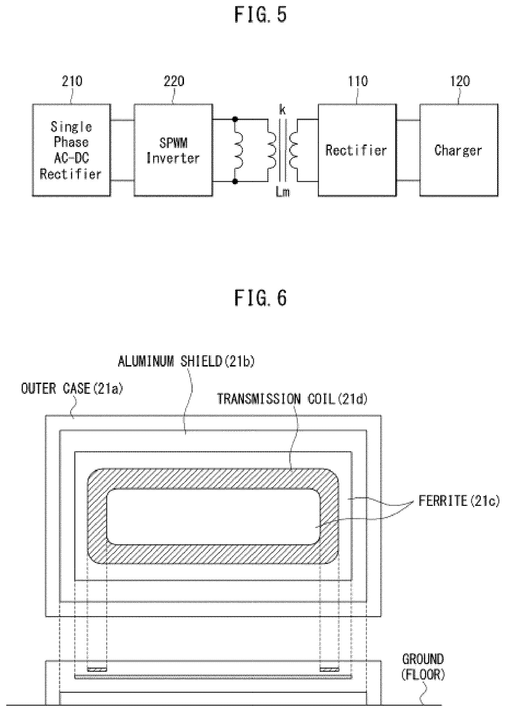

FIG. 5 shows an equivalent circuit of a single-phase to single-phase wireless power transfer (WPT) system according to an exemplary embodiment of the present disclosure.

A magnetic/inductive coupling or resonance structure formed between the primary coil and the secondary coil according to various embodiments of the present disclosure may be represented equivalently by a transformer shown in FIG. 5.

As shown in FIG. 5, a single-phase rectifier 210 and a sinusoidal pulse width modulation (SPWM) inverter 220 for applying an alternating current power to the primary coil may be disposed on a side of the primary coil.

In addition, a rectifier 110 and a charger 120 for transferring the power from the secondary coil 101C to the load or battery may be disposed on a side of the secondary coil.

The wireless power transfer system according to an exemplary embodiment of the present disclosure may include a power transfer circuit. The power transfer circuit shown in FIG. 5 may include a structure comprised of the single-phase rectifier 210 and the SPWM inverter 220 on the primary coil side as a technical feature.

The power transfer circuit according to an exemplary embodiment of the present disclosure shown in FIG. 5 may employ a proportional integral (PI) control scheme based on a measurement of the single-phase rectifier 210, as a technical feature, to control the single-phase rectifier 210 and the SPWM inverter 220 applying an alternating current power to the primary coil.

The SPWM inverter 220 may receive an output of the single-phase rectifier 210 and generate the alternating current power to supply the alternating current power as an output to the primary coil.

Meanwhile, an alternating current power rectified by the rectifier 110 may be supplied to the battery by the charger 120 to recharge the battery.

FIG. 6 is a conceptual cross sectional view and an elevation view of the power transmission pad 21 according to an exemplary embodiment of the present disclosure.

In FIG. 6, there is shown a transmission coil 21d that may be included in the transmission pad 21 in a device performing the wireless power transfer by a single-phase operation, for example, in the device shown in FIG. 5. The transmission pad 21 shown in FIG. 6 may support the single-phase operation mode. If the reception pad 11 includes the reception coil (not shown) having a shape corresponding to the transmission coil of FIG. 6, the reception pad 11 can perform the wireless power reception in the single-phase operation mode. The configuration of the coil and hardware of the reception pad 11 needed for the single-phase operation mode may be easily implemented by a person skilled in the art by modifying the transmission pad of FIG. 6, and detailed description thereof is omitted for simplicity.

As shown in FIG. 6, the power transmission pad 21 may include an outer case 21a forming an outer structure of the power transmission pad 21, an aluminum shield 21b having a shape of a planar plate and installed inside the outer case 21a, and a ferrite pad 21c installed on or above the aluminum shield 21b, and a transmission coil 21d installed on or above ferrite pad 21c. Here, "on or above" means an upward direction relative to the ground where the power transmission pad 21 is installed.

Here, the ferrite which is used for the ferrite pad 21c is a magnetic material containing iron oxide and can affect the wireless power transfer by reducing a magnetic resistance and facilitating a flow of magnetic flux.

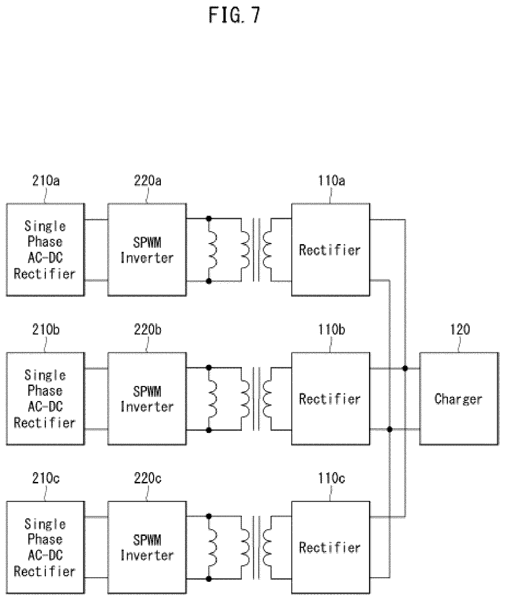

FIG. 7 shows an equivalent circuit of a three-phase to three-phase WPT system according to an exemplary embodiment of the present disclosure.

As shown in FIG. 7, each of the primary coil and the secondary coil may be implemented by a three-phase coil, and the WPT system may include, for each phase, a single-phase rectifier 210a-210c and a SPWM inverter 220a-220c for applying an AC power to the primary coil.

In addition, a rectifier 110a-110c may be disposed on the side of the secondary coil for each phase to transfer the power from the secondary coil to the load or battery through the charger 120.

The configuration of the single-phase rectifiers 210a-210c, the SPWM inverters 220a-220c, and the rectifiers 110a-110c shown in FIG 7 may be easily implemented by a person skilled in the art based on the single-phase rectifier 210, the SPWM inverter 220, and the rectifier 110, and detailed description thereof is omitted for simplicity.

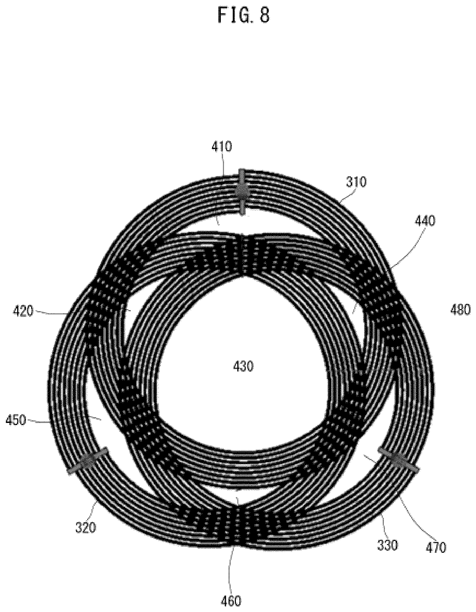

FIG. 8 is a conceptual plan view of a transmission and/or reception coil structure compatible with a three-phase/single-phase mode for power transfer according to an exemplary embodiment of the present disclosure.

As shown in FIG. 8, the coil structure includes three circular coils 310, 320, and 330 having the same size, each arranged to intersect with the others, and positioned such that there is no overlapping region of all three coils at any single point on the XY plane by adjusting distances from a central origin. That is, the arrangement is such that at most two coils overlap at any given point on the XY plane. This arrangement maximizes the exposed surface area of the coils, thereby improving the efficiency of wireless power transfer.

According to an exemplary embodiment of the present disclosure, a wireless power transmission pad 21 is provided to transfer wireless power to a reception pad 11. The wireless power transmission pad 21 may include primary coils 310, 320, and 330 to which the coil structure of FIG. 8 is applied. The wireless power transmission pad 21 may include a first primary coil 310 (primary coil) arranged to surround a first central point near the origin of a central space, a second primary coil 320 arranged to surround a second central point near the origin of the central space, a third primary coil 330 arranged to surround a third central point near the origin of the central space, and a housing that supports the first primary coil 310, the second primary coil 320, and the third primary coil 330. The first primary coil 310, the second primary coil 320, and the third primary coil 330 may be arranged such that a center of gravity of the first central point, the second central point, and the third central point is formed at the origin.

The first primary coil 310, the second primary coil 320, and the third primary coil 330 may be arranged within a circle centered at the origin, as a design guideline.

For example, the design guideline may be set as a circle having a diameter of Φ = 750 mm, and the first primary coil 310, the second primary coil 320, and the third primary coil 330 may be arranged within the circle of the design guideline.

The coil structure of the present disclosure is a structure in which centers of three-phase coils are gathered near the origin at the center. This structure may be more effectively defined through the design guideline.

Although the three central points are spaced apart, for example, a distance of several centimeters at an operating frequency of 85 kHz for wireless power transfer may be regarded as electrically negligible. When input power signals of the same phase are applied to the primary coils 310, 320, and 330, the magnetic fields generated by the coils 310, 320, and 330 are reinforced by the coil structure in which the respective central points are not significantly spaced from the origin and have the same rotational direction, thereby forming a magnetic field having a distribution similar to a magnetic field generated from a single coil by an in-phase input power signal, and a magnetic field operable in a single-phase operation mode may be formed.

The first primary coil 310, the second primary coil 320, and the third primary coil 330 may be arranged such that, at any xy coordinate on the xy-plane passing through the first central point, the second central point, and the third central point, a maximum of two coils are overlapped in the z-axis direction.

At a point on any xy coordinate on the xy-plane, the first primary coil 310, the second primary coil 320, and the third primary coil 330 are arranged in up to two layers rather than three layers, so that an upper exposure region of the coil structure may have an increased exposure ratio.

According to an exemplary embodiment of the present disclosure, when a secondary coil of a reception pad 11 includes a first secondary coil, a second secondary coil, and a third secondary coil to which the coil structure of FIG. 8 is applied, the first secondary coil, the second secondary coil, and the third secondary coil may be arranged such that a center of gravity of a fourth central point of the first secondary coil, a fifth central point of the second secondary coil, and a sixth central point of the third secondary coil is positioned on a central axis perpendicular to the xy-plane passing through the first central point, the second central point, and the third central point and passing through the origin.

According to an exemplary embodiment of the present disclosure, a wireless power reception pad 11 is a wireless power reception pad 11 that is provided to wirelessly receive power from a transmission pad 21 including a primary coil. The wireless power reception pad 11 includes a first secondary coil arranged to surround a fourth central point near the origin of a central space, a second secondary coil arranged to surround a fifth central point near the origin of the central space, a third secondary coil arranged to surround a sixth central point near the origin of the central space, and a housing that supports the first secondary coil, the second secondary coil, and the third secondary coil. The first secondary coil, the second secondary coil, and the third secondary coil are arranged such that a center of gravity of the fourth central point, the fifth central point, and the sixth central point is formed at the origin.

The first secondary coil, the second secondary coil, and the third secondary coil may be arranged within a circle centered at the origin, as a design guideline.

The first secondary coil, the second secondary coil, and the third secondary coil may be arranged such that, at any xy coordinate on the xy-plane passing through the fourth central point, the fifth central point, and the sixth central point, a maximum of two coils are overlapped in the z-axis direction.

In the exemplary embodiment of FIG. 8, according to the arrangement of the three circular coils 310, 320, and 330, seven regions 410, 420, 430, 440, 450, 460, and 470 inside the coils and an external region 480 may be defined.

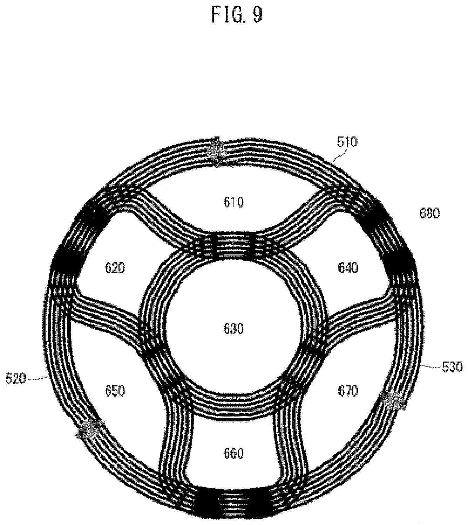

FIG. 9 is a conceptual plan view of a transmission and/or reception coil structure compatible with a three-phase/single-phase mode for power transfer according to another exemplary embodiment of the present disclosure.

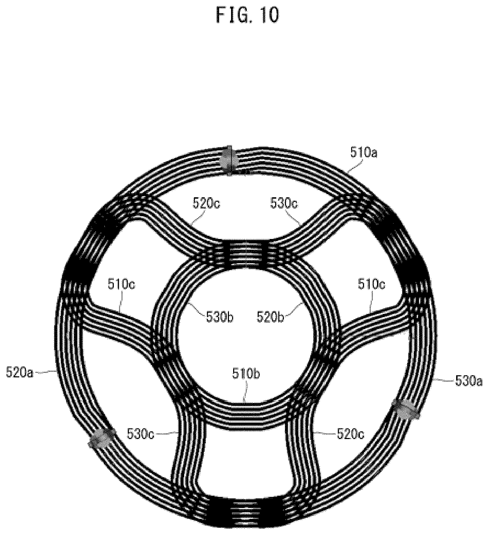

FIG. 10 is a conceptual plan view illustrating components of the coils shown in FIG. 9 in detail.

As shown in FIGS. 9 and 10, a wireless power transmission pad 21 according to an exemplary embodiment of the present disclosure is provided to transfer wireless power to a reception pad 11 including a secondary coil.

The wireless power transmission pad 21 may include primary coils 510, 520, and 530 to which the coil structure of FIGS. 9 and 10 is applied.

The wireless power transmission pad 21 may include a first primary coil 510 (primary coil) arranged to surround a first outer peripheral portion of an outer circle and a first inner peripheral portion of an inner circle, a second primary coil 520 arranged to surround a second outer peripheral portion of the outer circle and a second inner peripheral portion of the inner circle, and a third primary coil 530 arranged to surround a third outer peripheral portion of the outer circle and a third inner peripheral portion of the inner circle.

The first primary coil 510, the second primary coil 520, and the third primary coil 530 may be arranged such that the outer circle is formed by the overlaying of the three primary coils. According to an exemplary embodiment of the present disclosure, the three primary coils may be arranged such that all areas within the outer circle are utilized for power transfer.

The first primary coil 510, the second primary coil 520, and the third primary coil 530 may be arranged such that the inner circle is formed by being overlaid.

For example, based on the arrangement of the first primary coil 510, the second primary coil 520, and the third primary coil 530, a third region 630 inside the inner circle and an eighth region 680 outside the outer circle may be defined.

In addition, based on the arrangement of the first primary coil 510, the second primary coil 520, and the third primary coil 530, a region between the inner circle and the outer circle may be divided into a first region 610, a second region 620, a fourth region 640, a fifth region 650, a sixth region 660, and a seventh region 670.

According to an exemplary embodiment of the present disclosure, the first primary coil 510, the second primary coil 520, and the third primary coil 530 may be arranged such that the space between the outer circle and the inner circle is divided into six regions 610, 620, 640, 650, 660, and 670 having equal area.

When comparing the exemplary embodiment of FIG. 8 with the exemplary embodiments of FIGS. 9 and 10, in the exemplary embodiment of FIG. 8, the areas of six regions 410, 420, 440, 450, 460, and 470, excluding the central region which is the third region 430, are significantly smaller than the area of the third region 430, and furthermore, the six regions 410, 420, 440, 450, 460, and 470 have great differences in area.

Such an unbalanced area distribution may cause imbalance or asymmetry in the magnetic field distribution of the three-phase coils. An unbalanced or asymmetric magnetic field distribution may degrade the performance or efficiency of power transfer. Even if an unbalanced or asymmetric magnetic field distribution does not significantly degrade the performance or efficiency of power transfer, the unbalanced or asymmetric magnetic field distribution may cause issues related to electromagnetic compatibility (EMC), electromagnetic interference (EMI), or electromagnetic field (EMF).

In the exemplary embodiments of FIGS. 9 and 10, the first primary coil 510, the second primary coil 520, and the third primary coil 530 may be arranged to divide the space between an outer circle and an inner circle into six regions 610, 620, 640, 650, 660, and 670 having uniform areas.

Here, the uniform areas do not necessarily mean completely same areas but may refer to the regions 610, 620, 640, 650, 660, and 670 having significantly similar areas. For example, when the three coils 510, 520, and 530 are arranged at intervals of 120 degrees, a first region 610, a fifth region 650, and a seventh region 670 may have the same area and shape, and a second region 620, a fourth region 640, and a sixth region 660 may have the same area and shape. For convenience of description, in case that the area of the first region 610, the fifth region 650, and the seventh region 670 is referred to as "A", and the area of the second region 620, the fourth region 640, and the sixth region 660 is referred to as "B", the areas of the six regions 610, 620, 640, 650, 660, and 670 may be completely same when the A/B ratio is 1, and may be considered to be more uniform when the A/B ratio is closer to 1.

In one exemplary embodiment of the present disclosure, for example, a design guideline for the coil structure may be provided to maintain the A/B ratio within a specific range such as 0.80 to 1.20. The exemplified range of the A/B ratio does not limit the spirit of the present disclosure.

Compared with the exemplary embodiment of FIG. 8, the area ratio between a first region 410 and a second region 420 reaches two or three times, resulting in a great asymmetry or imbalance in magnetic field distribution, whereas in the exemplary embodiments of FIGS. 9 and 10, the A/B ratio is close to 1, thereby resolving the asymmetry or imbalance in magnetic field distribution.

The exemplary embodiments of FIGS. 9 and 10 may improve the concentration and symmetry of magnetic field distribution, thereby improving the performance or efficiency of power transfer. Even if an unbalanced or asymmetric magnetic field distribution does not significantly degrade the performance or efficiency of power transfer, the unbalanced or asymmetric magnetic field distribution may cause problems of electromagnetic compatibility (EMC), electromagnetic interference (EMI), and electromagnetic field (EMF), and thus, the exemplary embodiments of FIGS. 9 and 10 may improve the EMC, EMI, and EMF issues by providing a magnetic field distribution having balance and symmetry.

The first primary coil 510 may include a first outer coil portion 510a disposed on a first outer portion, a first inner coil portion 510b disposed on a first inner portion and facing the first outer coil portion, and a first connection coil portion 510c connecting the first outer coil portion and the first inner coil portion.

The second primary coil 520 may include a second outer coil portion 520a disposed on a second outer portion, a second inner coil portion 520b disposed on a second inner portion and facing the second outer coil portion, and a second connection coil portion 520c connecting the second outer coil portion and the second inner coil portion.

The third primary coil 530 may include a third outer coil portion 530a disposed on a third outer portion, a third inner coil portion 530b disposed on a third inner portion and facing the third outer coil portion, and a third connection coil portion 530c connecting the third outer coil portion and the third inner coil portion.

Referring again to FIGS. 9 and 10, according to another exemplary embodiment of the present disclosure, the wireless power reception pad 11 may include secondary coils 510, 520, and 530 having the coil structure applied in FIGS. 9 and 10.

The wireless power reception pad 11 according to another exemplary embodiment of the present disclosure is provided to receive wireless power from the transmission pad 21 including a primary coil. The wireless power reception pad 11 may include a first secondary coil 510 disposed to surround a first outer portion of an outer circle and a first inner portion of an inner circle, a second secondary coil 520 disposed to surround a second outer portion of the outer circle and a second inner portion of the inner circle, and a third secondary coil 530 disposed to surround a third outer portion of the outer circle and a third inner portion of the inner circle.

The first secondary coil 510, the second secondary coil 520, and the third secondary coil 530 may be arranged to form the outer circle by being overlaid. According to one exemplary embodiment of the present disclosure, the three secondary coils may be arranged such that all regions in the outer circle are used for power transfer.

The first secondary coil 510, the second secondary coil 520, and the third secondary coil 530 may be arranged to form the inner circle by being overlaid.

The first secondary coil 510, the second secondary coil 520, and the third secondary coil 530 may be arranged to divide the space between the outer circle and the inner circle into six regions 610, 620, 640, 650, 660, and 670 having uniform areas.

The first secondary coil 510 may include a first outer coil portion 510a disposed on the first outer portion, a first inner coil portion 510b disposed on the first inner portion and facing the first outer coil portion 510a, and a first connection coil portion 510c connecting the first outer coil portion 510a and the first inner coil portion 510b.

The second secondary coil 520 may include a second outer coil portion disposed on a second outer portion, a second inner coil portion disposed on a second inner portion and facing the second outer coil portion, and a second connection coil portion connecting the second outer coil portion and the second inner coil portion.

The third secondary coil 530 may include a third outer coil portion disposed on a third outer portion, a third inner coil portion disposed on a third inner portion and facing the third outer coil portion, and a third connection coil portion connecting the third outer coil portion and the third inner coil portion.

According to one exemplary embodiment of the present disclosure, a coil structure of FIG. 8 may be applied to the transmission coil of the transmission pad 21, the coil structure of FIG. 8 may be applied to the reception coil of the reception pad 11, and the coil structure of FIG. 8 may be applied to both the transmission coil and the reception coil.

According to another exemplary embodiment of the present disclosure, coil structures of FIGS. 9 and 10 may be applied to the transmission coil of the transmission pad 21, the coil structures of FIGS. 9 and 10 may be applied to the reception coil of the reception pad 11, and the coil structures of FIGS. 9 and 10 may be applied to both the transmission coil and the reception coil.

The operating principle and the overall operational concept of an exemplary embodiment in which the coil structure of FIGS. 9 and 10 is applied to the transmission coil are the same as those of an exemplary embodiment in which the coil structure of FIG. 8 is applied to the transmission coil.

For example, when input power of the same phase is applied to three circular coils 310, 320, and 330 in the coil structure of FIG. 8, magnetic fields generated from each of the coils may be combined to form a single magnetic field, so that a magnetic field distribution equivalent to that of a single-phase coil may be achieved.

Likewise, when input power of the same phase is applied to three coils 510, 520, and 530 in the coil structures of FIGS. 9 and 10, magnetic fields generated from each of the coils may be combined to form a single magnetic field, so that a magnetic field distribution equivalent to that of a single-phase coil may be achieved.

Accordingly, when either the primary coil or the secondary coil includes the coil structure of any one of FIGS. 8 to 10 and the opposite-side coil supports only a single-phase mode, wireless power transfer in a single-phase operation mode may be provided by using the coil structure according to the exemplary embodiment of the present disclosure.

Even when both the primary coil and the secondary coil include the coil structure of any one of FIGS. 8 to 10, wireless power transfer in a single-phase operation mode may be provided by using the coil structure according to the exemplary embodiment of the present disclosure, in cases where the single-phase mode is advantageous under various conditions including a charging capacity.

In addition, when the coil structure of any one of FIGS. 8 to 10 operates as a three-phase induction coil, a magnetic field generated by one coil and two other coils having different phases in the coil structure of FIGS. 8 to 10 is combined, so that a magnetic field distribution equivalent to that of a conventional three-phase induction coil may be achieved.

Accordingly, when either the primary coil or the secondary coil includes the coil structure of any one of FIGS. 8 to 10 and the opposite-side coil supports only a three-phase mode, wireless power transfer in a three-phase operation mode may be provided by using the coil structure according to the exemplary embodiment of the present disclosure.

Even when both the primary coil and the secondary coil include the coil structure of any one of FIGS. 8 to 10, wireless power transfer in a three-phase operation mode may be provided by using the coil structure according to the exemplary embodiment of the present disclosure, in cases where the three-phase mode is advantageous under various conditions including a charging capacity.

Therefore, when the coil structure of any one of FIGS. 8 to 10 is applied to at least one of the primary coil or the secondary coil, compatibility with an existing single-phase coil or three-phase coil may be achieved.

In a case where a combination of a ground assembly (GA) and a vehicle assembly (VA) includes a single-phase coil of FIG. 6 and a general three-phase coil, compatibility may not be achieved. When one side includes the single-phase coil of FIG. 6, coupling between coils is required to operate in a single-phase mode. However, when the other side includes a three-phase coil, a problem occurs in that, when signals of the same phase are applied, the direction of the field is formed in the opposite direction, and the magnetic field is not reinforced but canceled out.

Thus, according to conventional technology, a user of an electric vehicle equipped with either the single-phase coil of FIG. 6 or a general three-phase coil is required to search for an EVSE that matches the operation mode of the coil structure mounted in the electric vehicle in order to receive power.

Conversely, a provider of electric vehicle charging services using conventional technology is required to respectively install EVSE including the single-phase coil of FIG. 6 and EVSE including the general three-phase coil structure in order to provide services.

According to an exemplary embodiment of the present disclosure, when the secondary coil mounted in a vehicle employs the coil structure illustrated in FIGS. 8 to 10, the secondary coil may receive power regardless of whether the EVSE supplies power in the single-phase operation mode or the three-phase operation mode. Therefore, the electric vehicle charging service provider does not need to install EVSE by type and may reduce installation costs.

According to another exemplary embodiment of the present disclosure, when the primary coil of the EVSE employs the coil structure illustrated in FIGS. 8 to 10, power may be supplied in an operation mode corresponding to the operation mode permitted by the secondary coil mounted in the electric vehicle (either the single-phase operation mode or the three-phase operation mode). Thus, the secondary coil may receive power, and the electric vehicle user may be relieved from the burden of searching for an EVSE matching the operation mode of the secondary coil of the vehicle. As well, the electric vehicle charging service provider does not need to install EVSE by type and may reduce installation costs.

According to an exemplary embodiment of the present disclosure, the form of a wireless charging coil, which conventionally varies depending on complex capacities or operational methods, can be unified from the perspective of a service provider, thereby reducing system installation costs.

According to an exemplary embodiment of the present disclosure, user inconvenience in selecting and locating a charging spot can be alleviated, reducing aversion to wireless charging and lowering the entry barrier for purchasing electric vehicles adopting a wireless charging method.

According to an exemplary embodiment of the present disclosure, a transmission/reception coil structure having high compatibility with conventional coil structures can be provided, which allows installation on either the secondary coil on the vehicle side or the primary coil on the charging station side.

According to an exemplary embodiment of the present disclosure, a primary/secondary coil structure capable of selectively applying either a single-phase operation mode or a three-phase operation mode, considering the charging capacity based on the phase of the input power applied to the primary coil, and a wireless power transfer method employing such structure can be provided.

According to an exemplary embodiment of the present disclosure, a wireless power transfer (WPT) device with high power transfer efficiency can be provided by optimizing the layout of a new coil structure.

In an exemplary embodiment in which the coil structure of FIG. 9 and FIG. 10 is applied to a transmission coil, the first primary coil 510, the second primary coil 520, and the third primary coil 530 may be controlled to perform a single-phase operation or a three-phase operation according to a phase difference of input power between the respective primary coils 510, 520, and 530.

The first primary coil 510, the second primary coil 520, and the third primary coil 530 may be controlled to perform the single-phase operation when input power of the same phase is applied to each of the primary coils 510, 520, and 530.

The first primary coil 510, the second primary coil 520, and the third primary coil 530 may be controlled to perform the three-phase operation when input power having a constant phase difference is applied to each of the primary coils 510, 520, and 530.

The first primary coil 510, the second primary coil 520, and the third primary coil 530 may be controlled to perform the single-phase operation or the three-phase operation based on an operation mode permitted by a secondary coil of a reception pad 11.

In the exemplary embodiment of the present disclosure in which the coil structure of FIG. 9 and FIG. 10 is applied to the transmission coil, the first primary coil 510, the second primary coil 520, and the third primary coil 530 may be formed by winding a flat wire at least once.

As shown in FIG. 9 and FIG. 10, the coils 510, 520, and 530 may be formed of a flat wire. The coils 510, 520, and 530 may be implemented as a triple-layer structure having a size of, for example, 5 mm × 10 mm (using three 1 mm × 10 mm wires), considering heat generation and current flow.

In another exemplary embodiment of the present disclosure in which the coil structure of FIG. 9 and FIG. 10 is applied to the transmission coil, the coils 510, 520, and 530 may be formed of a litz wire.

The first primary coil 510, the second primary coil 520, and the third primary coil 530 may be formed by winding the litz wire at least once.

The manufacturing cost of the coil structure of FIG. 9 and FIG. 10 may be lower than that of a general three-phase WPT coil. Even when using at least one of a flat wire or a litz wire, the manufacturing cost of the coil structure may be lower than that of a general three-phase WPT coil.

In an exemplary embodiment of the present disclosure in which the coil structure of FIG. 9 and FIG. 10 is applied to the reception coil, the first secondary coil, the second secondary coil, and the third secondary coil may be formed by winding a flat wire at least once.

In another exemplary embodiment of the present disclosure in which the coil structure of FIG. 9 and FIG. 10 is applied to the reception coil, the first secondary coil, the second secondary coil, and the third secondary coil may be formed by winding a litz wire at least once.

Compared with a regular copper wire, the litz wire is advantageous in that the current flow does not become unstable with the increase in the current, losses are small so that a stable current flow may be maintained, and the temperature of the coil rises less. Therefore, the litz wire is an appropriate material for the electric vehicle wireless power transfer system using an operating frequency of 79 to 90 kHz. Generally, the price of the litz wire is set at a price per meter. There are attempts to use the litz wire in the electric vehicle wireless power transfer system taking such characteristics of the litz wire into account.

However, the wireless power transfer system for the light-duty electric vehicle requires the litz wire with a large current capacity (e.g., at least 50A or larger), which is dozens of times more expensive than a general litz wire and may cause an increase in the manufacturing cost of the electric vehicle.

Because the electric vehicle wireless charging system transfers large amounts of electric power wirelessly, strict heat management is always important. In addition, it is important to manage the heating of foreign objects such as metal.

However, due to the structure of the litz wire in which inner strands are surrounded by outer strands, it may be difficult to quickly discharge the generated heat to the outside of the litz wire. In addition, as the heat generation continues, the current loss in the litz wire increases. Therefore, it may be difficult to use the litz wire for a long period of time. As a result, the power transfer system using the litz wire needs a cooling arrangement, which increases the cost further.

Even if a cooling arrangement is added to the system, a thermal conductivity of the litz wire may be too low to quickly discharge the generated heat to the outside of the litz wire, and thus an overall cooling efficiency may be still low.

In addition, there may be some views to be considered that a supporting structure maintaining a shape of the coil made of the litz wire may impair the safety of the system.

Although the litz wire has a strength higher than the regular copper wire and facilitates maintaining a shape of the wire, the litz wire is linear-shaped, and a coil made of the litz wire may need a frame to maintain the shape of the litz wire and the coil. Such a frame is made of a dielectric with a low dielectric constant to reduce an electromagnetic influence on the operation of the coil. The dielectric with a low dielectric constant is generally vulnerable to heat, and thus is inadequate to use for a high-power charging at 22 Kilowatts (KW), for example, which generates a lot of heat. Additionally, because the frame is in contact with the litz wire, the frame may hinder a heat exchange, undergo a change in its shape during repeated heating and cooling processes, or cause a fire.

Therefore, the present disclosure provides an alternative example in addition to the example using the litz wire. The wireless power transmission pad or the power reception pad according to an embodiment of the present disclosure may be implemented using a flat wire.

The flat and rectangular wire according to an exemplary embodiment of the present disclosure may be a modification of a commercially available flat wire to adapt to the purpose of the present disclosure.

Flat wires available on the market generally have corners that are almost right-angled. These commercially available flat wires are used to increase a space factor. A wire according to an alternative example of the present disclosure maintains its flat shape has corners that are at least partially rounded.

The wire proposed by the present disclosure has characteristics of 1) having a flat or planar shape, and 2) having sides that are partially round and/or partially rectangular. The wire according to the example of the present disclosure having such characteristics, in a state of being wound in a coil, may be a flat wire having a shape optimized to generate an electromagnetic field suitable for the wireless power transfer.

Flat and rectangular wires may be available in various sizes, for example, single or multiple strands (e.g., eight strands), thickness ranges of 1.0-1.9 millimeters (mm), and width ranges of 3-20 mm. In addition, the rectangular wire can be wound into a coil of a continuously transposed conductor (CTC) form.

The advantage of the coil made of such a wire is that it can be used for a high voltage application, and the conductor adhesion of insulating material to the conductor is excellent enough to select and use one of diverse insulating materials such as KRAFT, THERMAL UPGRADE KRAFT, NOMEX, DENNISON, KAPTON, MICA, and CONDUCTOFOL.

When an insulation issue is solved in this way, the number of turns may be increased compared to a conventional litz wire coil. A coil with more turns may generate a stronger magnetic flux, thereby improving power transfer efficiency.

In addition, because it is essentially a single cylindrical metal structure when observed from outside, heat may be transferred quickly from the inside to the outside without any discontinuities.

Further, the litz wire has a structure that inner strands are surrounded by outer strands as mentioned above. Thus, when an internal short circuit or insulation deformation or deterioration occurs, it may be difficult to identify a location of a trouble, and partial maintenance of the wire may be impossible and the entire coil has to be replaced, which leads to an increase in maintenance costs. However, the coil structure employing the flat wire or the planar wire proposed in the present disclosure is more durable than the litz wire, and thus the troubles such as the short circuit in the wire are less likely to occur. Further, even if a trouble occurs, the location where the trouble occurred may be identified easily. Therefore, it may be possible to immediately fix the trouble, and even if the coil itself is replaced, the replacement cost is low. As a consequence, the coil structure according to the present disclosure requires much less resources for the maintenance.

In addition, the use of the flat wire structure has the advantage of a high heat transfer efficiency as well as a high freedom of arrangement, which enables to selectively apply various cooling techniques such as dry self-cooling, dry wind cooling, dry sealed self-cooling, inflow self-cooling, inflow wind cooling, inflow wind cooling, oil-flowing water cooling, oil-flowing wind cooling, and refrigerant cooling. Since various cooling techniques may be applied selectively or in combination, embodiment(s) of the present disclosure can have a very advantageous effect in cooling the heat generated during the power transfer.

The flat wire according to an exemplary embodiment of the present disclosure may be implemented using at least one material selected from copper and copper alloy, but the scope of the present disclosure is not limited thereto, and various conductors may be used for the flat wire as well.

Meanwhile, it may be advantageous for establishing an electromagnetic field near the coils to round the corners of the coil at least partially. A curvature at which the corners are rounded may also be determined taking into account the power transfer efficiency, the shape of the coil, and so on.

In an example, the coil structure 300 according to the present disclosure may be implemented, based on a shape and material of a bus bar forming a conductor connected to the battery inside the electric vehicle 10, by determining an aspect ratio of a cross section of the wire and a numerical range of a curvature of the rounded corner.

Comparing the example employing the litz wire with the alternative example, although the litz wire is a technology designed to increase the ratio of surface area i.e., current path, to the cross sectional area or volume, interferences between the strands of the litz wire in a central space of the litz wire bundles where the strands are dense may reduce the power transfer efficiency and increase the generation of heat.

Since the current flows through a surface of the conductor, the ratio of the surface area to the cross sectional area may be understood to correspond to the ratio of the current path to the total volume.

Examples of the present disclosure may increase the ratio of the surface area to the cross sectional area and improve the space factor by proposing the coil structure using the flat wire, thereby improving the power transfer efficiency.

The rounded corners may contribute to the formation of electromagnetic fields, resulting in more advantageous electromagnetic characteristics of the coil.

In one exemplary embodiment of the present disclosure, in which the coil structure of FIG. 9 and FIG. 10 is applied to a transmission coil, it may be recommended that the center of gravity of regions surrounded by the three coils 510, 520, and 530 of the primary coil be identical to the center of the outer circle of FIG. 9 and FIG. 10, or that a coordinate error in the XY plane between the center of gravity and the center of the outer circle be within a predetermined threshold.

For example, it may be recommended that the center of gravity of the regions surrounded by the three coils 510, 520, and 530 of the primary coil be identical to the center of the inner circle of FIG. 9 and FIG. 10, or that a coordinate error in the XY plane between the center of gravity and the center of the inner circle be within a predetermined threshold.

Likewise, in the transmission coil to which the coil structure of FIG. 9 and FIG. 10 is applied, it may be recommended that the center of the inner circle and the center of the outer circle be identical, or that a coordinate error in the XY plane between the center of the outer circle and the center of the inner circle be within a predetermined threshold.

In another exemplary embodiment of the present disclosure, in which the coil structure of FIG. 9 and FIG. 10 is applied to a reception coil, it may be recommended that the center of gravity of regions surrounded by the three coils 510, 520, and 530 of the secondary coil be identical to the center of the outer circle of FIG. 9 and FIG. 10, or that a coordinate error in the XY plane between the center of gravity and the center of the outer circle be within a predetermined threshold.

For example, it may be recommended that the center of gravity of the regions surrounded by the three coils 510, 520, and 530 of the secondary coil be identical to the center of the inner circle of FIG. 9 and FIG. 10, or that a coordinate error in the XY plane between the center of gravity and the center of the inner circle be within a predetermined threshold.

Likewise, in the reception coil to which the coil structure of FIG. 9 and FIG. 10 is applied, it may be recommended that the center of the inner circle and the center of the outer circle be identical, or that a coordinate error in the XY plane between the center of the outer circle and the center of the inner circle be within a predetermined threshold.

In another exemplary embodiment of the present disclosure, in which the coil structure of FIG. 9 and FIG. 10 is applied to both the transmission coil and the reception coil, the center of the outer circle on the primary coil side may be arranged to be perpendicular to the XY plane passing through the center of the outer circle on the secondary coil side and to be located on a central axis passing through the center of the outer circle on the secondary coil side.

That is, in the exemplary embodiment of the present disclosure in which both the primary coil and the secondary coil employ the coil structure of the present disclosure, the centers of the outer circles of the primary coil and the secondary coil may be arranged to be shared on the central axis so as to improve efficiency.

In another exemplary embodiment of the present disclosure, the center of the outer circle of the primary coil (primary side center) and the center of the outer circle of the secondary coil (secondary side center) are not necessarily required to have the same XY coordinates. Even when the XY coordinates of the primary side center and the secondary side center do not match, power may be wirelessly transferred from the primary coil to the secondary coil. However, when the XY coordinates of the primary side center and the secondary side center are significantly misaligned, the efficiency of wireless power transfer may be significantly degraded, and therefore an alignment process between the primary side center and the secondary side center may be recommended.

In addition, in order for wireless power transfer to be performed with the intended efficiency, it may be recommended that a coordinate error in the XY plane between the primary side center and the secondary side center be within a predetermined threshold.

According to one exemplary embodiment of the present disclosure shown in FIG. 9 and FIG. 10, a new coil structure capable of improving EMC and EMF issues by having a refined magnetic field distribution may be provided.

According to one exemplary embodiment of the present disclosure shown in FIG. 9 and FIG. 10, a new coil structure capable of increasing the utilization of the area surrounded by the coil during power transfer may be provided.

Although the above exemplary embodiments illustrate an exemplary embodiment having a flat ferrite structure, those skilled in the art will clearly understand that exemplary embodiments in which a ferrite core is formed at the center portion of the coil are also included within the spirit of the present disclosure.

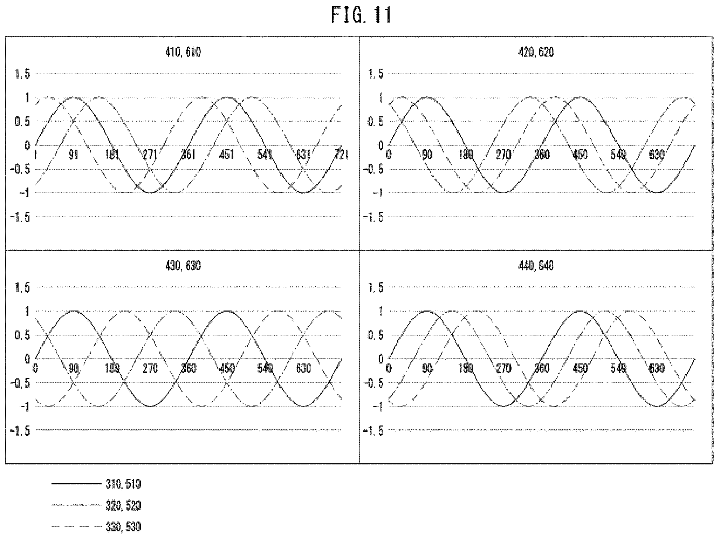

FIG. 11 is a graph illustrating the phase of the magnetic field induced by the three-phase alternating current signals by region for some regions in the exemplary embodiments of FIG. 8 to FIG. 10.

In FIG. 11, the phases of the magnetic fields induced by the three-phase alternating current signal in each of the first regions 410, 610, the second region 420, 620, the third region 430, 630, and the fourth region 440, 640 are shown.

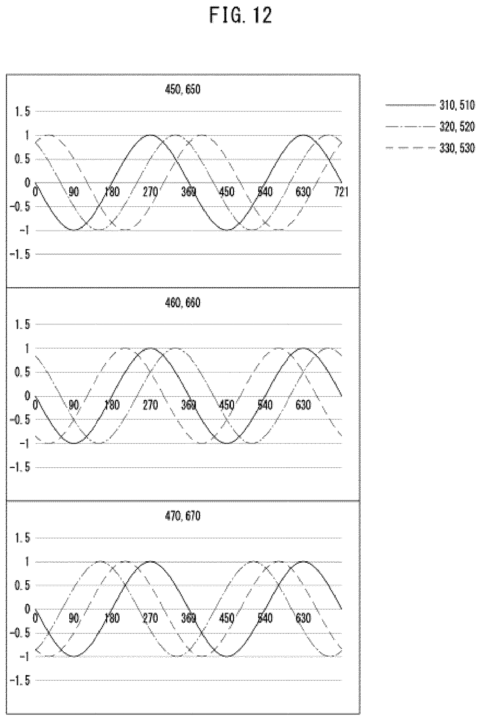

FIG. 12 is a graph illustrating the phase of the magnetic field induced by the three-phase alternating current signals by region for the remaining regions in the exemplary embodiments of FIG. 8 to FIG. 10.

In FIG. 12, the phases of the magnetic fields induced by the three-phase alternating current signal in each of the fifth region 450, 650, the sixth region 460, 660, and the seventh region 470, 670 are shown.

In FIG. 11 and FIG. 12, the phase of the magnetic field induced by the alternating current signals of each of the first-phase coil 310, 510, the second-phase coil 320, 520, and the third-phase coil 330, 530 is shown for each of the seven regions.

The three-phase magnetic field phases for each region in FIG. 11 and FIG. 12 may be commonly applied to the exemplary embodiments of FIG. 8 to FIG. 10.

As shown in FIG. 8, FIG. 11, and FIG. 12 together, in one exemplary embodiment of the present disclosure in which the coil structure of FIG. 8 is applied, the first-phase coil 310 may surround the first region 410, the second region 420, the third region 430, and the fourth region 440. By the current flowing through the first-phase coil 310, in-phase magnetic fields may be induced in the internal regions 410, 420, 430, and 440 of the first-phase coil 310, and out-of-phase magnetic fields may be induced in the external regions 450, 460, 470, and 480 of the first-phase coil 310. There is a 180° phase difference between the in-phase and the out-of-phase.

The second-phase coil 320 may surround the second region 420, the third region 430, the fifth region 450, and the sixth region 460. By the current flowing through the second-phase coil 320, in-phase magnetic fields may be induced in the internal regions 420, 430, 450, and 460 of the second-phase coil 320, and out-of-phase magnetic fields may be induced in the external regions 410, 440, 470, and 480 of the second-phase coil 320.

The third-phase coil 330 may surround the third region 430, the fourth region 440, the sixth region 460, and the seventh region 470. By the current flowing through the third-phase coil 330, in-phase magnetic fields may be induced in the internal regions 430, 440, 460, and 470 of the third-phase coil 330, and out-of-phase magnetic fields may be induced in the external regions 410, 420, 450, and 480 of the third-phase coil 330.

As shown in FIG. 9 to FIG. 12 together, in one exemplary embodiment of the present disclosure in which the coil structure of FIG. 9 and FIG. 10 is applied, the first-phase coil 510 may surround the first region 610, the second region 620, the third region 630, and the fourth region 640. By the current flowing through the first-phase coil 510, in-phase magnetic fields may be induced in the internal regions 610, 620, 630, and 640 of the first-phase coil 510, and out-of-phase magnetic fields may be induced in the external regions 650, 660, 670, and 680 of the first-phase coil 510.

The second-phase coil 520 may surround the second region 620, the third region 630, the fifth region 650, and the sixth region 660. By the current flowing through the second-phase coil 520, in-phase magnetic fields may be induced in the internal regions 620, 630, 650, and 660 of the second-phase coil 520, and out-of-phase magnetic fields may be induced in the external regions 610, 640, 670, and 680 of the second-phase coil 520.

The third-phase coil 530 may surround the third region 630, the fourth region 640, the sixth region 660, and the seventh region 670. By the current flowing through the third-phase coil 530, in-phase magnetic fields may be induced in the internal regions 630, 640, 660, and 670 of the third-phase coil 530, and out-of-phase magnetic fields may be induced in the external regions 610, 620, 650, and 680 of the third-phase coil 530.

When comparing the exemplary embodiment in which the coil structure of FIG. 8 is applied with the exemplary embodiment in which the coil structure of FIG. 9 and FIG. 10 is applied, the first region 410 of FIG. 8 and the first region 610 of FIG. 9 may provide the same function. Likewise, the second region 420 of FIG. 8 and the second region 620 of FIG. 9 may provide the same function, the third region 430 of FIG. 8 and the third region 630 of FIG. 9 may provide the same function, and the fourth region 440 of FIG. 8 and the fourth region 640 of FIG. 9 may provide the same function.

Likewise, the fifth region 450 of FIG. 8 and the fifth region 650 of FIG. 9 may provide the same function, the sixth region 460 of FIG. 8 and the sixth region 660 of FIG. 9 may provide the same function, and the seventh region 470 of FIG. 8 and the seventh region 670 of FIG. 9 may provide the same function.

Hereinafter, for convenience of description, the exemplary embodiments of FIG. 8 to FIG. 10 are described together. The respective regions of FIG. 8 and the respective regions of FIG. 9 may be described together, and the coils 310, 320, and 330 of FIG. 8 and the coils 510, 520, and 530 of FIG. 9 may be described together.

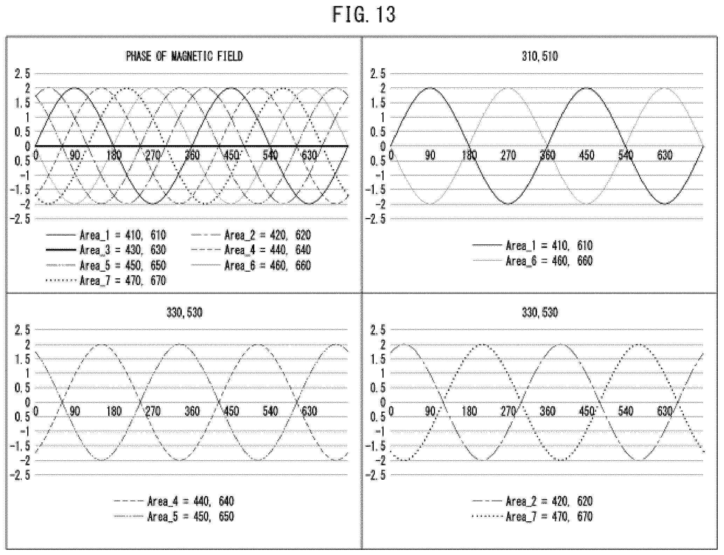

FIG. 13 is a graph illustrating the phase of the three-phase alternating current signals by region and by coil in the exemplary embodiments of FIG. 8 to FIG. 10.

In the exemplary embodiments of FIG. 8 to FIG. 10, the magnetic flux density of the third region 430, 630 may commonly be maintained at zero. This is because the magnetic fields induced by the current flowing through the three coils are canceled in the third region 430, 630. As shown in FIG. 8 to FIG. 10, the third region 430, 630 is located inside all of the three coils 310, 320, 330 or 510, 520, 530. As shown in FIG. 11, the magnetic field formed in the third region 430, 630 may be a superposition of the in-phase magnetic fields induced by the currents flowing through the three coils 310, 320, 330 or 510, 520, 530. As shown in FIG. 11, since the three-phase currents flowing through the three coils 310, 320, 330 or 510, 520, 530 have phase differences of 120 degrees with respect to each other, it may be seen that destructive interference occurs.

Since the first region 410, 610 is inside the first-phase coil 310, 510 and outside the second-phase coil 320, 520 and the third-phase coil 330, 530, as shown in FIG. 11, in-phase magnetic fields induced by the first-phase coil 310, 510 and out-of-phase magnetic fields induced by the second-phase coil 320, 520 and the third-phase coil 330, 530 may be superposed.

Since the sixth region 460, 660 is outside the first-phase coil 310, 510 and inside the second-phase coil 320, 520 and the third-phase coil 330, 530, as shown in FIG. 11, out-of-phase magnetic fields induced by the first-phase coil 310, 510 and in-phase magnetic fields induced by the second-phase coil 320, 520 and the third-phase coil 330, 530 may be superposed.

As shown in FIG. 13, due to the coupling between the three phases, a reinforced-phase magnetic field induced by the in-phase magnetic field of the first-phase coil 310, 510 may appear in the first region 410, 610, and a reinforced-phase magnetic field induced by the out-of-phase magnetic field of the first-phase coil 310, 510 may appear in the sixth region 460, 660.

Since the fourth region 440, 640 is inside the first-phase coil 310, 510 and the third-phase coil 330, 530 and outside the second-phase coil 320, 520, as shown in FIG. 11, in-phase magnetic fields induced by the first-phase coil 310, 510 and the third-phase coil 330, 530 and out-of-phase magnetic fields induced by the second-phase coil 320, 520 may be superposed.

Since the fifth region 450, 650 is outside the first-phase coil 310, 510 and the third-phase coil 330, 530 and inside the second-phase coil 320, 520, as shown in FIG. 11, out-of-phase magnetic fields induced by the first-phase coil 310, 510 and the third-phase coil 330, 530 and in-phase magnetic fields induced by the second-phase coil 320, 520 may be superposed.

As shown in FIG. 13, due to the coupling between the three phases, a reinforced-phase magnetic field induced by the in-phase magnetic field of the second-phase coil 320, 520 may appear in the fourth region 440, 640, and a reinforced-phase magnetic field induced by the out-of-phase magnetic field of the second-phase coil 320, 520 may appear in the fifth region 450, 650.

Since the second region 420, 620 is inside the first-phase coil 310, 510 and the second-phase coil 320, 520 and outside the third-phase coil 330, 530, as shown in FIG. 11, in-phase magnetic fields induced by the first-phase coil 310, 510 and the second-phase coil 320, 520 and out-of-phase magnetic fields induced by the third-phase coil 330, 530 may be superposed.

Since the seventh region 470, 670 is outside the first-phase coil 310, 510 and the second-phase coil 320, 520 and inside the third-phase coil 330, 530, as shown in FIG. 11, out-of-phase magnetic fields induced by the first-phase coil 310, 510 and the second-phase coil 320, 520 and in-phase magnetic fields induced by the third-phase coil 330, 530 may be superposed.

As shown in FIG. 13, due to the coupling between the three phases, a reinforced-phase magnetic field induced by the out-of-phase magnetic field of the third-phase coil 330, 530 may appear in the second region 420, 620, and a reinforced-phase magnetic field induced by the in-phase magnetic field of the third-phase coil 330, 530 may appear in the seventh region 470, 670.

The paired regions are 1) the first region 410, 610 and the sixth region 460, 660, 2) the fourth region 440, 640 and the fifth region 450, 650, and 3) the seventh region 470, 670 and the second region 420, 620. The more similar the areas of the paired regions are, the more balanced and symmetrical the distribution of the magnetic field may be.

In the exemplary embodiment of FIG. 8, the area differences between the paired regions are large, whereas in the exemplary embodiments of FIG. 9 and FIG. 10, the paired regions may be designed to have similar areas.

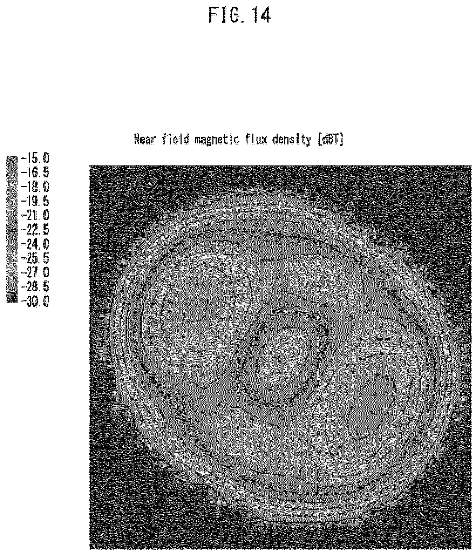

FIG. 14 is a graph illustrating simulation results of the magnetic flux density in the exemplary embodiments of FIG. 9 and FIG. 10.

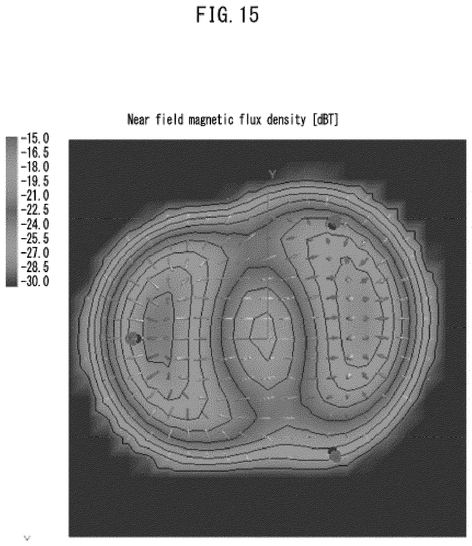

FIG. 15 is a graph illustrating simulation results of the magnetic flux density in the exemplary embodiment of FIG. 8.

As shown in FIG. 14 and FIG. 15, the results show that the exemplary embodiments of FIG. 9 and FIG. 10 improve the concentration and symmetry of the magnetic flux density.

Comparing FIG. 14 and FIG. 15, although the magnitude of the field is not significantly different, a difference between the two exemplary embodiments appears in the concentration of the field.

In the exemplary embodiments of FIG. 8 and FIG. 15, the field exhibits irregularities depending on the phase, whereas in the exemplary embodiments of FIG. 9, FIG. 10, and FIG. 14, the entire space inside the outer circle is used for power transfer, thereby showing a state in which the boundary of the external field forms an ellipse.

As a result, in the exemplary embodiments of FIG. 8 and FIG. 15, it is difficult for the concentrated region of the field to have perfect symmetry centered around the center, whereas the exemplary embodiments of FIG. 9, FIG. 10, and FIG. 14 may allow the concentrated region of the field to have high symmetry centered around the center.

The symmetry of the refined magnetic field distribution in the exemplary embodiments of FIG. 9, FIG. 10, and FIG. 14 may provide advantageous effects not only in terms of the efficiency and/or performance of power transfer but also in addressing potential EMC, EMF, and EMI issues.

In one exemplary embodiment of the present disclosure, in which the coil structure of FIG. 9 and FIG. 10 is applied to a transmission coil and/or a reception coil, the area ratios between the paired regions, namely, 1) the first region 410, 610 and the sixth region 460, 660, 2) the fourth region 440, 640 and the fifth region 450, 650, and 3) the seventh region 470, 670 and the second region 420, 620, may be designed to be close to 1. It may be recommended that the area ratio between the paired regions be within a predetermined threshold from 1 for the purpose of improving charging efficiency/performance or mitigating EMC, EMI, or EMF issues.

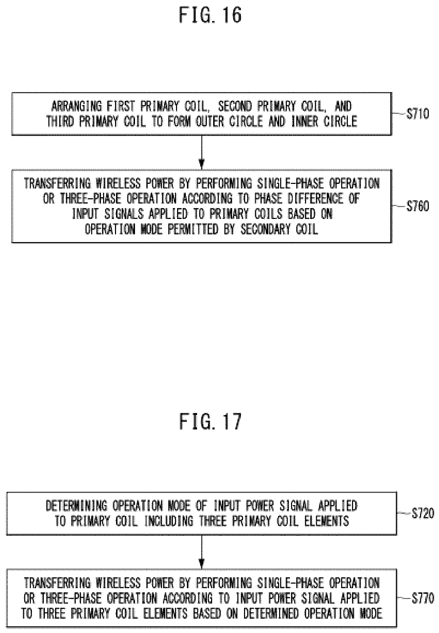

FIG. 16 is an operational flowchart conceptually illustrating a wireless power transfer method according to an exemplary embodiment of the present disclosure.

FIG. 16 may represent a wireless power transfer method corresponding to the exemplary embodiments of FIG. 9 and FIG. 10.

As shown in FIG. 16, the wireless power transfer method according to one exemplary embodiment of the present disclosure is a method of wirelessly transferring power from the transmission pad 21 including a primary coil to the reception pad 11 including a secondary coil. The wireless power transfer method may include providing a first primary coil 510 arranged to surround a first outer portion of an outer circle and a first inner portion of an inner circle, a second primary coil 520 arranged to surround a second outer portion of the outer circle and a second inner portion of the inner circle, and a third primary coil 530 arranged to surround a third outer portion of the outer circle and a third inner portion of the inner circle to form the outer circle, in step S710, and controlling such that wireless power is transferred to the reception pad 11 through a single-phase or a three-phase operation by applying input power to the first primary coil 510, the second primary coil 520, and the third primary coil 530, in step S760.

Before step S760 of controlling such that wireless power is transferred to the reception pad 11, identifying an operation mode permitted by the secondary coil may be performed.

In step S760 of controlling such that wireless power is transferred to the reception pad 11, the first primary coil 510, the second primary coil 520, and the third primary coil 530 may be controlled to perform single-phase operation or three-phase operation based on the operation mode permitted by the secondary coil of the reception pad 11.

When the operation mode permitted by the secondary coil is identified as a single-phase operation mode, in step S760 of controlling such that wireless power is transferred to the reception pad 11, the wireless power transfer to the reception pad 11 may be controlled through single-phase operation by applying input power having the same phase to the first primary coil 510, the second primary coil 520, and the third primary coil 530.

When the operation mode permitted by the secondary coil is identified as a three-phase operation mode, in step S760 of controlling such that wireless power is transferred to the reception pad 11, the wireless power transfer to the reception pad 11 may be controlled through three-phase operation by applying input power having a predetermined phase difference to each of the first primary coil 510, the second primary coil 520, and the third primary coil 530.

In step S710, in which the first primary coil 510, the second primary coil 520, and the third primary coil 530 are provided, the first primary coil 510, the second primary coil 520, and the third primary coil 530 may be arranged such that a space between the outer circle and the inner circle is divided into six regions 610, 620, 640, 650, 660, and 670 of uniform area.

In another exemplary embodiment of the present disclosure, the wireless power transfer method may further include, when the secondary coil of the reception pad 11 includes a first secondary coil, a second secondary coil, and a third secondary coil according to the coil structure of FIG. 9 and FIG. 10, providing a first secondary coil arranged to surround a first outer portion of an outer circle and a first inner portion of an inner circle, a second secondary coil arranged to surround a second outer portion of the outer circle and a second inner portion of the inner circle, and a third secondary coil arranged to surround a third outer portion of the outer circle and a third inner portion of the inner circle to form the outer circle.

In the exemplary embodiment of FIG. 16, since the wireless power transfer method supports both the three-phase operation mode and the single-phase operation mode, the operation mode may be determined by considering charging capacity and charging time.

A charging service provider for electric vehicles may provide a service model related to the relationship among charging capacity, charging time, and operation mode by utilizing the exemplary embodiments of the present disclosure.

For example, under conditions of 22 kW or less, the single-phase operation mode may be provided, and under conditions 22 kW or more, the three-phase operation mode may be provided. Although the single-phase operation mode may be preferred under conditions of 22 kW or less, depending on the exemplary embodiment, the three-phase operation mode may also be provided. Here, 22 kW is merely an exemplary guideline, and a different threshold may be proposed depending on various conditions.

Assuming that the three-phase operation mode may provide high-capacity charging service and reduce charging time, a user may subscribe to a service by specifying a preferred operation mode between the three-phase operation mode and the single-phase operation mode according to the user's situation. For example, when the user primarily requires high-speed charging in a short period of time, a service option in which the three-phase operation mode is applied by default (or preferentially) under applicable conditions may be provided. When the user is not restricted by charging time (for example, when primarily charging overnight in a parking area), the user may subscribe to a service option in which the single-phase operation mode is mainly provided.

According to one exemplary embodiment of the charging service, when the user does not specify an operation mode, the single-phase operation mode is provided by default, and when the user exercises the usage right for the three-phase operation mode, the three-phase operation mode may be provided.

FIG. 17 is an operational flowchart conceptually illustrating a wireless power transfer method according to another exemplary embodiment of the present disclosure.

According to another exemplary embodiment of the present disclosure, a wireless power transfer method is a method of transferring wireless power from a transmission pad including a primary coil to a reception pad including a secondary coil. The wireless power transfer method may include determining an operation mode of an input power signal to be applied to the primary coil based on one or more of an operation mode supported by the primary coil, an operation mode supported by the secondary coil, or an alignment state between central axes of the primary coil and the secondary coil, in step S720, and controlling such that wireless power is transferred to the reception pad by applying the input power signal to the primary coil based on the operation mode, in step S770.

For example, the primary coil may include three primary coil elements sharing a central region, and each of the three primary coil elements may include an outer region independent of the other primary coil elements.

In one exemplary embodiment of the present disclosure where the primary coil has the coil structure of FIG. 8, the three primary coil elements may be a first primary coil 310, a second primary coil 320, and a third primary coil 330.

For example, the three primary coil elements may share a third region 430 as the central region. In addition, each of the three primary coil elements may include, as an outer region independent of the other primary coil elements, a first region 410, a fifth region 450, and a seventh region 470, respectively. That is, the first primary coil 310 may include the first region 410 as the independent outer region, the second primary coil 320 may include the fifth region 450 as the independent outer region, and the third primary coil 330 may include the seventh region 470 as the independent outer region.

In another exemplary embodiment of the present disclosure where the primary coil has the coil structure of FIG. 9 and FIG. 10, the three primary coil elements may be a first primary coil 510, a second primary coil 520, and a third primary coil 530.

For example, the three primary coil elements may share a third region 630 as the central region. In addition, each of the three primary coil elements may include, as an outer region independent of the other primary coil elements, a first region 610, a fifth region 650, and a seventh region 670, respectively. That is, the first primary coil 510 may include the first region 610 as the independent outer region, the second primary coil 520 may include the fifth region 650 as the independent outer region, and the third primary coil 530 may include the seventh region 670 as the independent outer region.

The exemplary embodiment of FIG. 8 and the exemplary embodiments of FIG. 9 and FIG. 10 have the same structure in terms of geometrical topology. Accordingly, each coil element 310, 320, 330 and 510, 520, 530, and each region 410, 420, 430, 440, 450, 460, 470 and 610, 620, 630, 640, 650, 660, 670 in the exemplary embodiment of FIG. 8 and the exemplary embodiments of FIG. 9 and FIG. 10 are in an equivalent relationship and may perform the same function.

Determining the operation mode of the input power signal in step S720 may include selecting either a three-phase operation mode or a single-phase operation mode from among operation modes commonly supported by the primary coil and the secondary coil. For example, when the primary coil supports both the three-phase operation mode and the single-phase operation mode, and the secondary coil supports only one of the three-phase operation mode or the single-phase operation mode, the operation mode supported by the secondary coil may be selected.

Determining the operation mode of the input power signal in step S720 may include determining the operation mode as either a three-phase operation mode or a single-phase operation mode based on a user request of the reception pad 11 and charging conditions. For example, when the primary coil and the secondary coil support both the three-phase operation mode and the single-phase operation mode, the three-phase operation mode capable of charging in a short charging time may be preferentially selected, or the single-phase operation mode may be selected depending on the charging capacity, charging time, and the user's request for the reception pad 11.

Determining the operation mode of the input power signal in step S720 may include determining the operation mode as either the three-phase operation mode or the single-phase operation mode based on an alignment state between the central axes of the primary coil and the secondary coil. For example, when the primary coil and the secondary coil support both the three-phase operation mode and the single-phase operation mode, and the center of the secondary coil is offset from the center of the primary coil beyond the offset required by the standard, the single-phase operation mode may be selected instead of the three-phase operation mode.

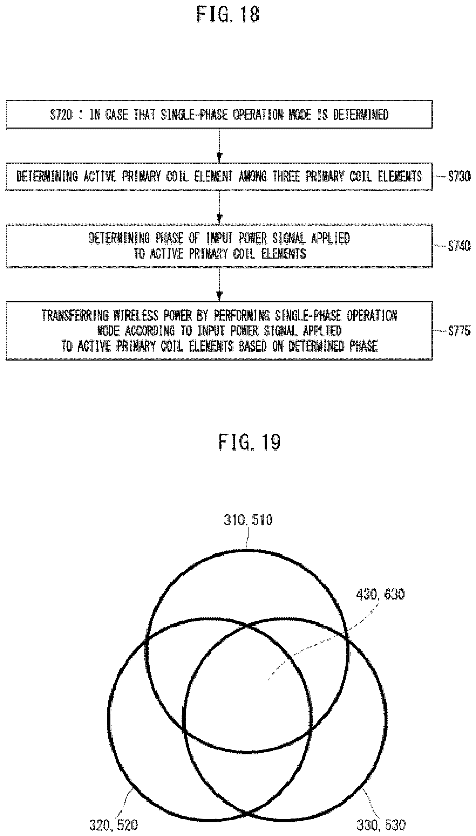

FIG. 18 is an operational flowchart illustrating in detail the method of FIG. 17 according to another exemplary embodiment of the present disclosure.

When the operation mode of the input power signal is determined to be the single-phase operation mode in step S720, controlling such that wireless power is transferred to the reception pad in step S770 may include determining at least one active primary coil element among three primary coil elements to which the input power signal is to be applied in step S730, and determining a phase of the input power signal to be applied to each of the at least one active primary coil element in step S740.

For example, step S770 may further include performing the single-phase operation mode by applying the input power signal to each of the active primary coil elements based on the determined phase, thereby wirelessly transferring power in step S775.

FIG. 19 is a conceptual diagram illustrating an exemplary embodiment of the present disclosure in which the method of FIG. 18 is performed.

As shown in FIG. 19, one exemplary embodiment of the present disclosure is illustrated in which step S730 and step S740 are performed when the single-phase operation mode is selected in step S720.

As described above, since the exemplary embodiment of FIG. 8 and the exemplary embodiments of FIG. 9 and FIG. 10 have the same structure in terms of geometrical topology, the coil structure is simplified in FIG. 19, and the three coil elements may correspond to a first coil element 310, 510, a second coil element 320, 520, and a third coil element 330, 530.

In step S770 of controlling such that wireless power is transferred to the reception pad, all of the three primary coil elements may be determined as active primary coil elements in step S730, and it may be determined in step S740 that single-phase input power signals having the same phase are applied to all of the three active primary coil elements.

For example, when the center of the secondary coil is aligned within the offset from the center of the primary coil, or when the center of the secondary coil is aligned on the central region 430, 630 of the primary coil, all of the three primary coil elements may be determined as active primary coil elements in step S730.

In step S775, when single-phase input power signals having the same phase are applied to all of the three active primary coil elements, a magnetic field in the single-phase operation mode may be formed via the central region 430, 630 of the primary coil, and wireless power may be transferred to the reception pad.

The single-phase alternating current signals of the same phase may be applied to all of the three primary coil elements. Accordingly, a magnetic field identical to that of a single coil may be formed in the central region 430, 630.

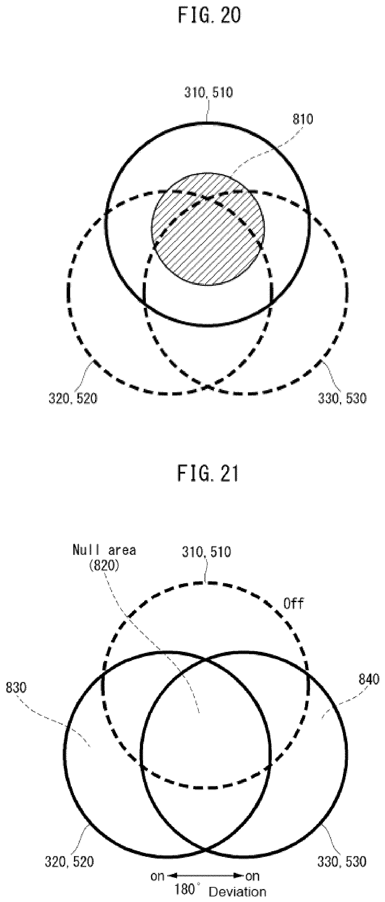

FIG. 20 is a conceptual diagram illustrating another exemplary embodiment of the present disclosure in which the method of FIG. 18 is performed.

As shown in FIG. 20, another exemplary embodiment of the present disclosure is illustrated in which step S730 and step S740 are performed when the single-phase operation mode is selected in step S720.

As previously described, since the exemplary embodiment of FIG. 8 and the exemplary embodiments of FIG. 9 and FIG. 10 have the same structure in terms of geometrical topology, the coil structure is simplified in FIG. 20, and the three coil elements may correspond to a first coil element 310, 510, a second coil element 320, 520, and a third coil element 330, 530.

In step S770 of controlling such that wireless power is transferred to the reception pad, one of the three primary coil elements may be determined as an active primary coil element in step S730, and it may be determined in step S740 that a single-phase input power signal is applied to the one active primary coil element.

For example, when the secondary coil is a single coil and the center of the secondary coil is offset from the center of the primary coil beyond the offset required by the standard, an operation mode in which a region where the magnetic field of the primary coil is concentrated is selectively activated may be initiated in order to ensure power transfer efficiency.

As shown in FIG. 20, it may be assumed that the center of the secondary coil is positioned closer to the first primary coil element 310, 510. The first primary coil element 310, 510 may be determined as the active primary coil element in step S730.

In step S775, when the single-phase input power signal is applied to the one active primary coil element, which is the first primary coil element 310, 510 selected in step S730, a magnetic field in the single-phase operation mode may be formed via an active central region 810 including the center of the one active primary coil element, and wireless power may be transferred to the reception pad.

For example, the single-phase alternating current signal may be applied only to the one selected primary coil element among the three primary coil elements, and a magnetic field identical to that of a single coil may be formed in a region near the center of the selected primary coil element (see 810 in FIG. 20).

That is, even when the result of alignment between the primary coil and the secondary coil deviates from the offset range required by the standard, the single-phase operation mode may be selected in order to ensure that the power transfer efficiency is above a reference threshold, and only one of the primary coil elements may be selected as the active coil element based on the position of the center of the secondary coil.

FIG. 21 is a conceptual diagram illustrating still another exemplary embodiment of the present disclosure in which the method of FIG. 18 is performed.

As shown in FIG. 21, still another exemplary embodiment of the present disclosure is illustrated in which step S730 and step S740 are performed when the single-phase operation mode is selected in step S720.

As previously described, since the exemplary embodiment of FIG. 8 and the exemplary embodiments of FIG. 9 and FIG. 10 have the same structure in terms of geometrical topology, the coil structure is simplified in FIG. 21, and the three coil elements may correspond to a first coil element 310, 510, a second coil element 320, 520, and a third coil element 330, 530.

In step S770 of controlling such that wireless power is transferred to the reception pad, two of the three primary coil elements may be determined as active primary coil elements in step S730, and it may be determined in step S740 that single-phase input power signals having opposite phases are applied to each of the two active primary coil elements.

For example, it may be assumed that the secondary coil is implemented to correspond to a primary coil of a double D (DD) coil type. In addition, when the effective reception region of the secondary coil is located on the second primary coil element 320, 520 or the third primary coil element 330, 530 in FIG. 21, the first primary coil element 310, 510 may be deactivated, and the second primary coil element 320, 520 and the third primary coil element 330, 530 may operate like a DD coil.

In step S730, the second primary coil element 320, 520 and the third primary coil element 330, 530 may be determined as the two active primary coil elements.

In step S740, it may be determined that input power signals having opposite phases with a 180° phase difference are applied to the second primary coil element 320, 520 and the third primary coil element 330, 530.

In step S775, when single-phase input power signals having opposite phases are applied to each of the two active primary coil elements, a magnetic field in the single-phase operation mode may be formed via a non-overlapping exclusive region 830 or 840 between the two active primary coil elements, and wireless power may be transferred to the reception pad 11.

For example, a (single-phase) alternating current signal having a 180° phase difference in opposite directions may be applied to two selected coil elements among the three primary coil elements. In a null area 820, the magnetic field may be canceled, and a magnetic field may be formed based on the same operational principle as the DD (Double D) coil structure via an exclusive region 830 or 840.

As shown in the exemplary embodiments of FIGS. 17 to 21, due to the structural characteristics of the coil structure, the magnitude of the leaked magnetic field to the surroundings is significantly reduced when operating in a three-phase mode. This effect of the three-phase operating mode may be taken into consideration, and the three-phase operating mode may be selected.

Among the exemplary embodiments operating in the single-phase mode, as shown in FIG. 19, when the three coil elements operate in the same phase, the center points of the coil elements are all different. Therefore, the magnitude of the leaked magnetic field to the surroundings is much smaller than in the case of a general single-phase coil that delivers energy of the same magnitude. This effect of the exemplary embodiment of FIG. 19 may be taken into consideration, and the operating mode of FIG. 19 may be selected.

Among the exemplary embodiments operating in the single-phase mode, as shown in FIG. 20, when only one of the three coils operates in a single-phase manner, it will be understood by those skilled in the art that the intensity of the leaked magnetic field will be similar to that of a typical single-phase coil operation.

Considering the exemplary embodiments of the various coil structures proposed in the present disclosure, under the assumption of delivering the same energy, EMC and EMF performance of the three-phase operating mode may be expected to be significantly superior.

In the case of the single-phase operating mode proposed in the present disclosure, the operating principle is the same as that of a general single coil operation. However, from the perspective of the application, an optimized combination may be explored in consideration of the alignment state between the primary coil and the secondary coil, and thus performance equal to or better than that of the general single coil operation may be provided.

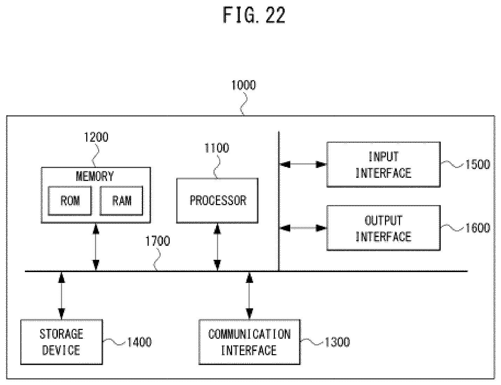

FIG. 22 is a block diagram illustrating a generalized configuration of hardware that is included in or associated with a wireless power transmission pad and/or a wireless power reception pad of the present disclosure to control a sequence for wireless power transfer.

For convenience of description, the hardware controlling the sequence for the wireless power transfer may be referred to as a controller 1000.

The controller 1000 may be disposed on a side of the electric vehicle 100, on a side of the electric vehicle supply equipment (EVSE), or on a side of the power transmission device or pad 210.

The controller 1000 may include at least one processor 1100, a memory 1200 storing at least one instruction for performing the operations described above through the processor 1100, and a communication interface 1300 connected to a network to perform communications. The controller 1000 for wireless power transfer may further include a storage device 1400 capable of storing the at least one instruction for performing the operations described above or data generated during the execution of the instruction. The controller 1000 for wireless power transfer may further include an input interface 1500 and an output interface 1600 for interactions with a user. The components of the controller 1000 for wireless power transfer may be connected to each other by a system bus 1700 to communicate with each other.

The controller or computing system 1000 according to an embodiment of the present disclosure may include at least one processor 1100 and the memory 1200 storing program instructions instructing the at least one processor 1100 to perform at least one process step. At least some of the operations or process steps of the method according to an embodiment of the present disclosure may be performed by the at least one processor 1100 loading and executing the program instructions from the memory 1200.

The processor 1100 may include a central processing unit (CPU) or a graphics processing unit (GPU) or may be implemented by another kind of dedicated processor suitable for performing the method of the present disclosure.

Each of the memory 1200 and the storage device 1400 may be comprised of at least one of a volatile storage medium and a non-volatile storage medium. For example, the memory 1200 may be comprised of at least one of a read only memory (ROM) and a random access memory (RAM).

Here, the at least one instruction may include at least one of: a sequence suitable for identifying at least one of the electric vehicle 10, the electric vehicle supply equipment (EVSE) 20, and the power transmission pad 21, a sequence suitable for associating two or more devices among the electric vehicle 10, the electric vehicle supply equipment (EVSE) 20, the power transmission pad 21 through wireless communications, a sequence suitable for performing the alignment and/or the pairing through a positioning of a counterpart device, and a sequence suitable for allowing to supply an alternating current power for the power transfer after the alignment and/or the pairing.

Additionally, the controller 1000 may include the communication interface 1300 that performs communications through a wireless communication network.

Additionally, the controller 1000 may further include the storage device 1400, the input interface 1500, and the output interface 1600.

The components of the controller 1000 may be connected to each other by the system bus 1700 to communicate with each other.

The controller 1000 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA). The device and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

## Claims

1. A wireless power transmission pad configured to transmit wireless power to a reception pad including a secondary coil, comprising:
a first primary coil 510 arranged to surround a first outer portion 5 10a of an outer circle and a first inner portion 510b of an inner circle;
a second primary coil 520 arranged to surround a second outer portion 520a of the outer circle and a second inner portion 520b of the inner circle; and
a third primary coil 530 arranged to surround a third outer portion 530a of the outer circle and a third inner portion 530b of the inner circle,
wherein the first primary coil, the second primary coil, and the third primary coil are arranged to form the outer circle by being overlaid.

2. The wireless power transmission pad of claim 1, wherein the first primary coil, the second primary coil, and the third primary coil are arranged to form the inner circle by being overlaid.

3. The wireless power transmission pad of claim 1, wherein the first primary coil, the second primary coil, and the third primary coil are arranged to divide a space between the outer circle and the inner circle into six regions having uniform areas.

4. The wireless power transmission pad of claim 1,
wherein the first primary coil includes:
a first outer coil portion 510a disposed on the first outer portion;
a first inner coil portion 510b disposed on the first inner portion and facing the first outer coil portion; and
a first connection coil portion 510c connecting the first outer coil portion and the first inner coil portion,
wherein the second primary coil includes:
a second outer coil portion 520a disposed on the second outer portion;
a second inner coil portion 520b disposed on the second inner portion and facing the second outer coil portion; and
a second connection coil portion 520c connecting the second outer coil portion and the second inner coil portion,
wherein the third primary coil includes:
a third outer coil portion 530a disposed on the third outer portion;
a third inner coil portion 530b disposed on the third inner portion and facing the third outer coil portion; and
a third connection coil portion 530c connecting the third outer coil portion and the third inner coil portion.

5. The wireless power transmission pad of claim 1, wherein the first primary coil, the second primary coil, and the third primary coil are formed by winding a flat wire at least once.

6. The wireless power transmission pad of claim 1, wherein the first primary coil, the second primary coil, and the third primary coil are formed by winding a litz wire at least once.

7. The wireless power transmission pad of claim 1, wherein the first primary coil, the second primary coil, and the third primary coil are controlled to perform a single-phase operation or a three-phase operation according to a phase difference of input power among the primary coils.

8. The wireless power transmission pad of claim 1, wherein the first primary coil, the second primary coil, and the third primary coil are controlled to perform a single-phase operation based on input power having the same phase being applied to each of the primary coils.

9. The wireless power transmission pad of claim 1, wherein the first primary coil, the second primary coil, and the third primary coil are controlled to perform a three-phase operation based on input power having a predetermined phase difference being applied to each of the primary coils.

10. The wireless power transmission pad of claim 1, wherein the first primary coil, the second primary coil, and the third primary coil are controlled to perform a single-phase operation or a three-phase operation based on an operation mode permitted by the secondary coil of the reception pad.

11. A wireless power reception pad configured to receive wireless power from a wireless power transmission pad including a primary coil, comprising:
a first secondary coil arranged to surround a first outer portion of an outer circle and a first inner portion of an inner circle;
a second secondary coil arranged to surround a second outer portion of the outer circle and a second inner portion of the inner circle; and
a third secondary coil arranged to surround a third outer portion of the outer circle and a third inner portion of the inner circle,
wherein the first secondary coil, the second secondary coil, and the third secondary coil are arranged to form the outer circle by being overlaid.

12. The wireless power reception pad of claim 11, wherein the first secondary coil, the second secondary coil, and the third secondary coil are arranged to form the inner circle by being overlaid.

13. The wireless power reception pad of claim 11, wherein the first secondary coil, the second secondary coil, and the third secondary coil are arranged to divide a space between the outer circle and the inner circle into six regions having uniform areas.

14. The wireless power reception pad of claim 11,
wherein the first secondary coil includes:
a first outer coil portion disposed on the first outer portion;
a first inner coil portion disposed on the first inner portion and facing the first outer coil portion; and
a first connection coil portion connecting the first outer coil portion and the first inner coil portion,
wherein the second secondary coil includes:
a second outer coil portion disposed on the second outer portion;
a second inner coil portion disposed on the second inner portion and facing the second outer coil portion; and
a second connection coil portion connecting the second outer coil portion and the second inner coil portion,
wherein the third secondary coil includes:
a third outer coil portion disposed on the third outer portion;
a third inner coil portion disposed on the third inner portion and facing the third outer coil portion; and
a third connection coil portion connecting the third outer coil portion and the third inner coil portion.

15. The wireless power reception pad of claim 11, wherein the first secondary coil, the second secondary coil, and the third secondary coil are formed by winding a flat wire or a litz wire at least once.

16. A method of transferring wireless power from a transmission pad including a primary coil to a reception pad including a secondary coil, comprising:
providing a first primary coil arranged to surround a first outer portion of an outer circle and a first inner portion of an inner circle, a second primary coil arranged to surround a second outer portion of the outer circle and a second inner portion of the inner circle, and a third primary coil arranged to surround a third outer portion of the outer circle and a third inner portion of the inner circle, such that the outer circle is formed by the first primary coil, the second primary coil, and the third primary coil; and
controlling such that wireless power is transferred to the reception pad through a single-phase operation or a three-phase operation by applying input power to the first primary coil, the second primary coil, and the third primary coil.

17. The method of claim 16,
wherein in the controlling of the wireless power being transferred to the reception pad,
the wireless power is transferred to the reception pad through the single-phase operation by applying input power of the same phase to the first primary coil, the second primary coil, and the third primary coil.

18. The method of claim 16,
wherein in the controlling of the wireless power being transferred to the reception pad,
the wireless power is transferred to the reception pad through the three-phase operation by applying input power having a constant phase difference respectively to the first primary coil, the second primary coil, and the third primary coil.

19. The method of claim 16,
wherein in the controlling of the wireless power being transferred to the reception pad,
the first primary coil, the second primary coil, and the third primary coil are controlled to perform the single-phase operation or the three-phase operation based on an operation mode permitted by the secondary coil of the reception pad.

20. The method of claim 16,
wherein in the providing of the first primary coil, the second primary coil, and the third primary coil,
the first primary coil, the second primary coil, and the third primary coil are arranged such that a space between the outer circle and the inner circle is divided into six regions having uniform areas.

21. A method of transferring wireless power from a transmission pad including a primary coil to a reception pad including a secondary coil, comprising:
determining an operation mode of an input power signal to be applied to the primary coil based on one or more of an operation mode supported by the primary coil, an operation mode supported by the secondary coil, or an alignment state between central axes of the primary coil and the secondary coil; and
controlling such that wireless power is transferred to the reception pad by applying the input power signal to the primary coil based on the operation mode,
wherein the primary coil includes three primary coil elements sharing a central region, and each of the three primary coil elements includes an outer region independent of the other primary coil elements.

22. The method of claim 21,
wherein in the determining of the operation mode of the input power signal,
the operation mode of the input power signal is determined as either a three-phase operation mode or a single-phase operation mode from among operation modes commonly supported by the primary coil and the secondary coil.

23. The method of claim 21,
wherein in the determining of the operation mode of the input power signal,
the operation mode of the input power signal is determined as either a three-phase operation mode or a single-phase operation mode based on a user request and a charging condition of the reception pad.

24. The method of claim 21,
wherein in the determining of the operation mode of the input power signal,
the operation mode of the input power signal is determined as either a three-phase operation mode or a single-phase operation mode based on an alignment state between central axes of the primary coil and the secondary coil.

25. The method of claim 21,
wherein based on the operation mode of the input power signal being determined as the single-phase operation mode,
the controlling of the wireless power being transferred to the reception pad includes:
determining at least one active primary coil element among the three primary coil elements to which the input power signal is to be applied; and
determining a phase of the input power signal to be applied to each of the active primary coil elements.

26. The method of claim 25,
wherein, in the controlling of the wireless power being transferred to the reception pad, all of the three primary coil elements are determined as the active primary coil elements, and
based on a single-phase input power signal having the same phase being applied to all of the three active primary coil elements, a magnetic field in the single-phase operation mode is formed via the central region of the primary coil, and wireless power is transferred to the reception pad.

27. The method of claim 25,
wherein, in the controlling of the wireless power being transferred to the reception pad, one of the three primary coil elements is determined as the active primary coil element, and
based on a single-phase input power signal being applied to the one active primary coil element, a magnetic field in the single-phase operation mode is formed via an active central region including a center of the one active primary coil element, and wireless power is transferred to the reception pad.

28. The method of claim 25,
wherein, in the controlling of the wireless power being transferred to the reception pad, two of the three primary coil elements are determined as the active primary coil elements, and
based on a single-phase input power signal having opposite phases being applied to the two active primary coil elements, a magnetic field in the single-phase operation mode is formed via an exclusive region that is not overlapped between the two active primary coil elements, and wireless power is transferred to the reception pad.
